(19) Europäisches Patentamt European Patent Office Office européen des brevets

(11) **EP 4 495 844 A1**

(12) **EUROPEAN PATENT APPLICATION**

(43) Date of publication:
**22.01.2025 Bulletin 2025/04**

(21) Application number: **23186602.1**

(22) Date of filing: **20.07.2023**

(51) International Patent Classification (IPC):
**G06N 10/60** $^{(2022.01)}$     **G06N 10/20** $^{(2022.01)}$

(52) Cooperative Patent Classification (CPC):
**G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Pasqal Netherlands B.V.**
**1076 ED Amsterdam (NL)**

(72) Inventors:
• **Paine, Anna Emma**
  **1076 ED Amsterdam (NL)**
• **Elfving, Vincent Emanuel**
  **1076 ED Amsterdam (NL)**
• **Kyriienko, Oleksandr**
  **1076 ED Amsterdam (NL)**

(74) Representative: **De Vries & Metman**
  **Overschiestraat 180**
  **1062 XK Amsterdam (NL)**

(54) **QUANTUM CIRCUITS**

(57)     Methods and systems are disclosed for solving a differential problem using a hybrid computer system. The differential problem defines a differential equation, and a target function defines an approximate solution to the differential equation. The target function is defined as a sum of basis functions with parameterized coefficients. The method comprises receiving or determining a quantum circuit defining operations of a parameterized quantum model of the differential equation, and determining the solution to the differential problem based on the parameterized quantum model and, optionally, a loss function associated with the differential problem. The quantum circuit defines operations for encoding primitive elements (e.g., terms such as f(x), f(x)/dx, g(x), etc.) of the differential equation in a plurality of quantum states of quantum elements of the quantum processor. Each quantum state of the plurality of quantum states corresponds to a set of (parametrized or unparametrized) coefficients associated with the basis functions, of which at least one quantum state of the plurality of quantum states corresponds to a set of parametrized coefficients associated with the basis functions. The determination of the solution includes varying the variational parameters to determine a set of optimal parameters. The varying of the variational parameters includes: translating the operations of the quantum circuit into control signals for control and readout of the quantum elements of the quantum register; applying the operations of the quantum circuit to the quantum elements based on the control signals; determining classical measurement data by measuring one or more comparisons, e.g. overlaps, between pairs of quantum states from the plurality of quantum states; computing a loss value based on the loss function and the classical measurement data; and adjusting the variational parameters based on the loss value.

Fig. 1A (prior art)

EP 4 495 844 A1

Fig. 1B

Fig. 1C

# EP 4 495 844 A1

**Description**

<u>Technical field</u>

The disclosure relates to quantum coefficient encoders, and in particular, though not exclusively, to methods and systems for solving a (non)linear set of differential equations using a hybrid quantum computer, and to a computer program product enabling a hybrid quantum data processing system to perform such methods.

<u>Background</u>

Systems of differential equations (DEs) which are important but currently hard to solve are present in many fields - including hydrodynamics, finance, aerodynamics, and more. In many cases, differential equations of interest cannot be solved with analytic methods and thus there is a lot of emphasis on numerical methods. Numerical methods include finite element methods and global spectral methods. Properties of differential equations that may lead to difficulty to solve include stiffness, high degrees of non-linearity and being high-dimensional. Therefore, development of new algorithms and improvements for solving differential equations is an active area of research.

Quantum computing is a burgeoning field with promises of implementing algorithms for certain problems with a speed up over their classical counterpart - known as quantum advantage. These speed-ups come from the properties unique to quantum computers-such as superposition, entanglement, and exponentially scaling computational space - which lead to a fundamentally different way of computation.

Developing quantum algorithms which can realise quantum advantage is not possible for all problems. Fields which are promising for such advantage to be found include fields which are native to quantum such as chemistry applications and simulation. Alternatively fields with large problems are also promising such as generative modelling and differential equations.

Quantum algorithms solving differential equations mostly fall into two categories - variational or discretising. Variational solvers utilise circuits with tuneable parameters to represent a function. A loss function representing the problem is then optimised to receive parameter values which give a solution. Algorithms in this category are often suitable for near-term implementation. However, they are often heuristic in nature, performance can depend a lot on choice of hyper-parameters and speed-ups are not provably guaranteed. Alternatively, there are the class of algorithms which discretise the differential equation into a linear system of equations. Quantum computing can then be utilised to solve the resulting linear system of equations (LSE). The most well-known quantum algorithm to solve linear systems of equations is the Harrow-Hassidim-Lloyd (HHL) algorithm, of which many variations exist, along with alternative algorithms. These approaches possess provable guarantees but generally require larger noise-free quantum computation and therefore must wait for the fault tolerant quantum regime.

WO2022/101483 A1 describes a method for solving a set of (non)linear differential equations (DEs) using a hybrid classical/quantum data processing system. A variational trial function is encoded using quantum circuits and evaluated for a predetermined set of collocation points, using the quantum processor. The trial function is classically optimised by minimising a loss function over the set of points. This requires a large number of evaluations of the quantum circuits, for each collocation point for each value of the variational parameter.

It would be advantageous to reduce the training time.

Hence, from the above, it follows that there is a need in the art for a system and method for solving a differential problem that reduces or avoids the drawbacks of the prior art.

<u>Summary</u>

It is an aim of embodiments in this disclosure to provide a system and method for solving differential equations that avoids, or at least reduces the drawbacks of the prior art.

In a first aspect, embodiments in this disclosure relate to a method for solving a differential problem using a hybrid computer system comprising a classical computer system and a quantum processor. The differential problem defines a differential equation, and a target function defines an approximate solution to the differential equation. The target function is defined as a sum of basis functions with parameterized coefficients. The method comprises receiving or determining information on a quantum circuit defining operations (e.g., gate operations) of a parameterized quantum model of the differential equation, and determining the solution to the differential problem based on the parameterized quantum model and, optionally, a loss function associated with the differential problem. The quantum circuit defines operations for encoding primitive elements (e.g., terms such as $f(x)$, $f(x)/dx$, $g(x)$, etc.) of the differential equation in a plurality of quantum states of quantum elements of the quantum processor. Each quantum state of the plurality of quantum states may correspond to a set of (parametrized or unparametrized) coefficients associated with the basis functions, of which at least one quantum state of the plurality of quantum states may correspond to a set of parametrized coefficients associated with the basis functions. The determination of the solution may include varying the variational parameters to determine a set of optimal parameters defining the solution to the differential equation. The varying of the variational parameters includes: translating the operations of the quantum circuit into control signals for control and readout of the quantum elements of the quantum register; applying the operations of the quantum circuit to the quantum elements based on the control signals; determining classical measurement data by measuring one or more comparisons, e.g. overlaps, between pairs of quantum states from the plurality of quantum states; computing a loss value based on the loss function and the classical measurement data; and adjusting the variational parameters based on the loss value.

In general, the differential problem comprises one or more differential equations and, optionally, one or more conditions such as boundary conditions or initial conditions. A solution to the differential problem is given by one or more solution functions that obey the conditions and for which the one or more differential equations hold true, or for which a suitably defined error is minimised. Each differential equation comprises one or more primitive elements. As used herein, a primitive element can be at least one of: an unknown function of an independent variable, a (first-order or higher-order) derivative of the unknown function with respect to the independent variable, a known function of the independent variable, or a product thereof. In the examples listed above, f(x) is an unknown function of an independent variable x, df/dx is a first-order derivative of the unknown function, and g(x) is a known function of the independent variable x. In general, coefficients associated with an unknown function are parametrized, while coefficients associated with a known function are not parametrized.

Thus, the method may be considered to comprise determining a formulation of quantum circuits representing the primitive elements of the one or more differential equations in terms of coefficients with respect to a set of orthogonal basis functions. The basis functions are functions of the independent variable of the differential equation, and the coefficients are independent of the independent variable of the differential equation.

As used herein, a comparison between two quantum states may refer to an overlap of the two quantum states. Such an overlap may be measured directly, or as an expectation value. In some embodiments, only the real or the imaginary part of the overlap is determined.

In a general approach, one may start with selecting a set of basis functions. The set of basis functions may be selected taking into account the nature of the differential problem; for example, for periodic problems, the Fourier basis may be selected, and for aperiodic problems, the Chebyshev basis may be selected. As in these examples, the basis may be an orthogonal basis.

Then, at least part of the differential problem is expressed in terms of coefficients with respect to the selected set of basis functions. As noted above, these coefficients are independent of the independent variable. Hence, by finding an optimal solution in terms of coefficients, the differential problem is solved for all values of the independent variable. However, the quality of the solution may depend on the selected basis and the number of basis functions under consideration (which is typically a function of the number of available qubits in the quantum processor).

Thus, mathematically, the method may be understood as transforming the differential equation defined by the differential problem to a different basis (so that the differential equation may be written in a way that is independent of the independent variable), and solving the differential equation in that different basis.

In general, the parametrized target function is encoded as $f(x) = \langle 0|G_x^\dagger\, G_\theta|0\rangle$, wherein $G_x$ is a (not necessarily unitary) operator that encodes the independent variable $x$ of the differential equation, and wherein $G_\theta$ is an (also not necessarily unitary) operator that encodes parametrized coefficients with respect to the basis functions encoded by $G_x$. Preferably, the set of basis functions defined by $G_x$ is orthogonal. Furthermore, $G_x$ is selected such that $\mathrm{d}G_x/\mathrm{d}x = \widetilde{\mathcal{D}}\, G_x$, wherein $\widetilde{\mathcal{D}}$ is a matrix (referred to as the Derivative Generating Matrix) that is independent of the independent variable. As a result, the derivative of the parametrized target function can be encoded as $f'(x) = \langle 0|\big(G_x^\dagger\widetilde{\mathcal{D}}^\dagger\big)\, G_\theta|0\rangle$, but given that matrix multiplication is associative, this may equally be written as $f'(x) = \langle 0|G_x^\dagger\, \big(\widetilde{\mathcal{D}}^\dagger G_\theta\big)|0\rangle$.

Some typical choices for $G_\theta$ are:

1)    $G_\theta = \hat{U}_\theta$, i.e., a unitary operator, so that $f_\theta(x) = \langle x|f_\theta\rangle$.;

2)    $G_\theta = \theta_s\, \hat{U}_\theta$, i.e., a unitary operator multiplied by a scalar $\theta_s$ to scale the range of potential values, so that $f_\theta(x) = \theta_s\, \langle x|f_\theta\rangle$.. This scalar can be drawn outside the overlap (or expectation value), and may therefore be handled by the classical data processing system;

3) $G_\theta = \theta_s \hat{\mathcal{U}}_\theta + \theta_{sh} \hat{I}$, where $\theta_{sh}$ is again a scaling factor and $\hat{I}$ is defined such that $\langle 0|G_x^\dagger \hat{I}|0\rangle = 1 \; \forall x$, so that $f_\theta(x) = \theta_s \langle x|f_\theta\rangle + \theta_{sh}$.

The target function (also sometimes referred to as trial function) may be written as an overlap between an encoding $|x\rangle$ of the independent parameter x and corresponding coefficients $f_\theta$ (independent of the independent variable): $f_\theta(x) = \langle x|f_\theta\rangle$. Here, $|x\rangle$ represents an encoding of $|f_\theta\rangle$ represents an un-normalised, wavefunction-like object (e.g., a sum of wavefunctions: $|f_\theta\rangle = \Sigma_i c_i |f_{\theta,i}\rangle$). Similarly, a derivative of the function may be written $f'_\theta(x) = \langle x|f'_\theta\rangle$ and a known function may be written as $g(x) = \langle x|g\rangle$, et cetera. Thus, each primitive element of the differential equation can be written as an overlap with the encoding of the independent parameter $|x\rangle$, and hence, the entire differential equation $DE$ can be written in such a form:

$$DE = \langle x|DE\rangle\rangle = \sum_i \varepsilon_i \langle x|DE_i\rangle$$

The solution $f_{\theta_{opt}}(x)$ can then be found by solving $|DE\rangle\rangle = \mathbf{0}$, for example in a variational manner by finding parameters $\theta = \theta_{opt}$ that minimise $\langle\langle DE|DE\rangle\rangle$. Other methods may also be used, e.g., a quantum algorithm for solving $|DE\rangle\rangle = 0$ as a linear or non-linear system of equations (in particular when the differential equation is a linear differential equation). As the problem to be solved is now independent of x, the solution is found for the entire domain in one optimisation.

By contrast, in DQC, the trial function was encoded as an expectation value dependent on x:, e.g.,

$$f(x) = \langle f_\theta(x)|\hat{\mathcal{C}}|f_\theta(x)\rangle$$

for some cost function $\hat{\mathcal{C}}$. This requires individual optimisation for each collocation point. When the solution is wanted with a high resolution, a large number of collocation points is needed. This grows very quickly as the dimension of the problem grows (typically exponentially with the dimension of the problem).

In DQC, the number of quantum evaluations is proportional to the product of the number of collocation points and the number of different derivatives in the differential equation. In the methods as described herein, no collocation points are used, and the number of quantum evaluations is proportional to the square of the number of primitive elements in the differential equation. This number of quantum evaluations is generally much smaller, and hence, finding the solution (also referred to as training the parametrised quantum model) is much more efficient.

In comparison to methods that use amplitude-encoding in the computational basis in combination with finite differencing to compute function derivative, the methods described herein may obtain a higher precision, because analytical differentiation can be used (thus avoiding discretisation errors and compound errors). Moreover, the methods described herein allow for easy read-out of function values (and derivative function values) for arbitrary x, and do not require full-state tomography.

In an embodiment, the one or more quantum circuits further define operations for encoding a value of an independent variable of the differential equation in a first quantum state using a feature map associated with the basis functions; encoding at least one of the primitive elements in a second quantum state representing a set of coefficients associated with the basis function; and measuring an overlap between the first and second quantum states.

By computing an overlap between an encoding for a value of the independent variable and a set of coefficients of a primitive element, that primitive element may be evaluated at the provided value of the independent variable, allowing to compute, for instance, f(x), f'(x), et cetera. Depending on the definition of the function, scaling and/or shifting of the measurement result may be needed to obtain the function value.

The set of coefficients may comprise parametrised coefficients, for instance to evaluate $f_\theta(x)$ or a derivative thereof. This may be used to evaluate, e.g., a boundary condition. In that case, the result may be used as input in the loss function.

The parameters of the parametrised coefficients may correspond to the optimal parameters that have been found, in order to evaluate the solution to the differential problem for an arbitrary input value. For example, the function value for arbitrary x may be obtained by determining $f_{\theta_{opt}}(x) = \langle x|f_{\theta_{opt}}\rangle\rangle$, and similarly, the function value for a derivative may be obtained by determining $\langle x|f'_{\theta_{opt}}\rangle\rangle$.

In an embodiment, the coefficients associated with a derivative (with respect to the independent variable of the differential equation) of the parametrised target function are obtainable by multiplying the coefficients associated with the parametrised target function with a derivative generating matrix or Hermitian conjugate thereof, the derivative generating matrix being determined based on the basis functions.

This way, the derivative of the parametrised target function is encoded directly in the quantum register, e.g. using an analytical determination of the derivative. This can prevent or reduce discretisation errors, and may prevent the need for finite differencing on the quantum processor.

In general, the coefficients of the derivative of the trial function may be obtained by multiplying the coefficients of the trial function with a derivate generating matrix: $|f'_\theta\rangle\rangle = \widetilde{\mathcal{D}}^\dagger |f_\theta\rangle\rangle$, where the derivate generating matrix $\widetilde{\mathcal{D}}$ depends on the set of basis functions; in particular, the derivate generating matrix $\widetilde{\mathcal{D}}$ may be defined such that $\mathrm{d}G_x/\mathrm{d}x = \widetilde{\mathcal{D}}\, G_x$, where $G_x$ is the operator that encodes the independent variable x of the differential equation, i.e., $|x\rangle = G_x|0\rangle$ and $\mathrm{d}/\mathrm{d}x\,|x\rangle = \widetilde{\mathcal{D}}\, G_x|0\rangle$. In other words, the derivative generating matrix is the matrix that, when multiplied with the feature map associated with the basis functions, results in the derivative of the feature map with respect to the variable encoded by the feature map. Higher-order derivatives may then be obtained by repeated matrix multiplication. The derivative generating matrix is independent of the independent variable.

In an embodiment, encoding a primitive element corresponding to a known function of an independent variable of the differential problem comprises determining a parametrised representation of the known function based on a feature map associated with the basis functions and variationally optimising the parametrised representation, and using the optimised parameters to encode the primitive element. Known methods, such as Quantum Circuit Learning, may be used to determine the optimised parameters. The parametrised representation of the known function may comprise the feature map associated with the basis functions to encode the independent variable and a variational Ansatz.

In an embodiment, encoding a primitive element corresponding to a known function of an independent variable of the differential problem comprises preparing a quantum state representing an amplitude encoding of the known function in the computational basis and applying a transform associated with the basis functions to the quantum state. The amplitude encoding in the computational basis may be encoded directly, using known amplitude-encoding techniques, or indirectly, e.g., by encoding coefficients in a different basis and applying an inverse transform associated with that different basis. For example, a (periodic) function may be encoded in the Fourier basis, an inverse quantum Fourier transform may be used to generate the encoding in the computational basis, and a quantum Chebyshev transform may be used to obtain an encoding in the Chebyshev basis; or vice versa.

In an embodiment, encoding a primitive element corresponding to a known function of an independent variable of the differential problem comprises determining the coefficients with respect to the basis functions, e.g., analytically or using the classical computer, and encoding the determined coefficients. This may be an efficient way to encode a constant in, e.g., the Fourier or Chebyshev basis.

In an embodiment, the one or more quantum circuits define operations for applying a transform associated with the basis functions, preferably a Quantum Fourier Transform, a Quantum Chebyshev Transform, or a Quantum Hartley Transform, for transforming a state in the computational basis to a basis associated with the basis functions.

In an embodiment, the one or more quantum circuits define operations for applying an inverse transform associated with the basis functions, e.g., an inverse Quantum Fourier Transform, an inverse Quantum Chebyshev Transform, or an inverse Quantum Hartley Transform, for transforming a state in the basis associated with the basis functions to the computational basis.

The use of the (inverse) transform associated with the basis functions allows a straightforward back-and-forth between the computational basis and the basis defined by the basis functions.

In an embodiment, the differential problem comprises a boundary condition, and the one or more quantum circuits define operations for encoding the target function and/or a derivative thereof at one or more input values associated with the boundary condition. The operations may comprise a feature map associated with the basis functions for encoding the one or more input values. In such an embodiment, the loss value may be at least partly based on measurement data obtained by measuring an overlap between the encoded one or more input values and a set of coefficients associated with the respective target function and/or derivative thereof.

As explained above, the overlap between an input value encoded with the feature map associated with the basis functions and the coefficients -with respect to those basis functions- associated with a (derivative) function, provide the (derivative) function value at that input value. As a boundary condition is typically specified as a value of a solution function at a certain point (or higher-dimensional domain), including a term based on the value of the target function in the loss function may ensure the boundary condition is met. For example, a distance such as an absolute difference or Euclidean distance between the specified boundary value and the evaluated boundary value may be include in the loss function. In some contexts, a boundary condition may also be referred to as an initial value.

For example, if a boundary condition is specified as $f(x_0) = f_0$, the target function may be evaluated as $\langle x_0 | f_\theta \rangle$, which may be computed in any suitable manner. A contribution $\mathcal{L}_{BC}$ to the loss function may then have the form

$$\mathcal{L}_{BC} = d(\langle x_0 | f_\theta \rangle, f_0)$$

, with $d(x,y)$ a suitable metric, for example, $d(x,y) = s|x - y|^n$ for some positive numbers s and $n$.

In an embodiment, determining the set of optimal parameters comprises determining a derivative of the target function and/or derivative thereof with respect to a parameter parametrizing the parametrised coefficients; and extremising a cost or loss function value based on a gradient-descent method or a gradient-ascent method.

In an embodiment, the one or more quantum circuits comprise operations encoding a differentiated parameterized Ansatz, wherein the differentiated parameterized Ansatz is obtained by analytically differentiating the parameterized Ansatz with respect to a parameter parametrizing the parameterized Ansatz.

In an embodiment, the set of basis functions are based on Fourier functions, or wherein the set of basis functions define Chebyshev polynomials.

In an embodiment, the differential problem comprises a product of at least a first and a second primitive element. The one or more quantum circuits may then further comprise operations for encoding the first primitive element in a first quantum state corresponding to a set of first coefficients; encoding the second primitive element in a second quantum state corresponding to a set of second coefficients; and adder and/or subtraction circuits for encoding, based on the first quantum state and the second quantum state, the product in a third quantum state corresponding to a set of third coefficients. The third coefficients may be obtained by addition and/or subtraction of the coefficients associated with the first primitive element and the coefficients associated with the second primitive element.

In an embodiment, each of the first and second primitive elements represents the target function and/or a derivative of the target function with respect to the independent variable of the differential equation.

In an embodiment, the differential problem comprises a plurality of independent variables. Then, a first variable of the plurality of independent variables may be encoded in a first quantum register and a second variable of the plurality of independent variables may be encoded in a second quantum register.

The encoding of the first variable may be based on the same basis function as the encoding of the second variable, or on different basis function. Cross-terms comprising a product of an encoding of the first variable and an encoding of the second variable may be determined based on a measurement of an overlap between a quantum state in the first quantum register and a quantum state in the second quantum register.

This way, multi-variate differential problems may be solved.

In an embodiment, applying one or more quantum circuits to the quantum register comprises translating each of the one or more quantum circuits into a sequence of signals (e.g., pulses, typically electric or electromagnetic pulses such as voltage pulses, optical pulses, or microwave pulses) and using the sequence of signals to operate the qubits in the quantum register of the quantum processor.

In an embodiment, receiving hardware measurement data comprises applying a read-out signal to qubits of the quantum processor and, in response to the read-out signal, measuring quantum hardware measurement data.

In general, the embodiments described herein can be implemented as sequences of operations that can be executed on, e.g., a neutral atom quantum computer, either in digital mode of operation, in analog mode, or in digital-analog mode. In particular, a hybrid quantum computer as described herein may include one or more of: a gate-based qubit device, a digital/analog quantum device, a neutral-atom-based quantum device, an optical qubit device and/or a gaussian boson sampling device.

In an aspect, the disclosure relates to a hybrid quantum computer system comprising a classical computer system and a quantum register. The quantum register may have at least $n$ qubits, with generally $n > 1$. The hybrid quantum computer system is configured to solve a differential problem, the differential problem defining a differential equation, a target function defining an approximate solution of the differential equation, the target function being defined as a sum of basis functions with parameterized coefficients.

In an embodiment, the hybrid quantum computer system is configured for receiving or determining, by the classical computer system, information on one or more quantum circuits defining operations of a parameterized quantum model of the differential equation, the one or more quantum circuits defining operations for encoding primitive elements (e.g., terms such as f(x), f(x)/dx, g(x), etc.) of the differential equation in a plurality of quantum states of quantum elements of the quantum processor, each quantum state of the plurality of quantum states corresponding to a set of coefficients associated with the basis functions, at least one quantum state of the plurality of quantum states corresponding to a set of parametrized coefficients associated with the basis functions; and determining, by the classical computer system, the solution to the differential problem based on the parameterized quantum model and a loss function associated with the differential problem, the determining including varying the variational parameters to determine a set of optimal parameters defining the solution of the differential equation; the varying of the variational parameters including: translating the operations of the one or more quantum circuits into control signals for control and readout of the quantum elements of the quantum register; applying the operations of one or more the quantum circuit to the quantum elements based on the control signals; determining classical measurement data by measuring one or more comparisons, e.g. overlaps, between pairs of quantum states from the plurality of quantum states; computing a loss value based on the loss function and the classical measurement data; and adjusting the variational parameters based on the loss value.

In an embodiment, the hybrid computer system is further configured for executing any one or more of the method steps described above.

In a further aspect, embodiments in this disclosure relate to a method for solving a differential problem using a hybrid computer system comprising a classical computer system and a quantum processor. The differential problem defines a differential equation, and a target function defines an approximate solution to the differential equation. The target function is defined as a sum of basis functions with unknown coefficients. The method comprises receiving or determining information on a quantum circuit defining operations (e.g., gate operations) of a quantum model of the differential equation, and determining the solution to the differential problem based on the quantum model. The quantum circuit defines operations for encoding primitive elements (e.g., terms such as f(x), f(x)/dx, g(x), etc.) of the differential equation in a plurality of quantum states of quantum elements of the quantum processor. Each quantum state of the plurality of quantum states is defined by a set of (known or as yet unknown) coefficients associated with the basis functions, of which at least one quantum state of the plurality of quantum states is defined by a set of parametrized coefficients associated with the basis functions. The determination of the solution includes using a quantum algorithm to solve a linear or non-linear system of equations to obtain a set of coefficients.

Determining an overlap between a first quantum state corresponding to a first set of coefficients associated with the basis functions and a second quantum state corresponding to a second set of coefficients associated with the basis functions may comprise encoding the first set of coefficients into a first wave function $|\psi_1\rangle$ using a first operator and encoding the second set of coefficients into a second wave function $|\psi_2\rangle$ using a second operator. The second operator is typically different from the first operator. For example, a first unitary operator $\hat{U}_1$ may be used to define $|\psi_1\rangle = \hat{U}_1|0\rangle$ and a second unitary operator $\hat{U}_2$ may be used to define $|\psi_2\rangle = \hat{U}_2|0\rangle$. If the first and/or second set of coefficients comprises parametrised coefficients, the respective first and/or second operator may depend on the parameter parametrising the respective parametrised coefficients, e.g., $\hat{U}_1 = \hat{U}_1(\theta)$ and/or $\hat{U}_2 = \hat{U}_2(\theta)$. The method may further comprise determining the overlap $\langle\psi_1|\psi_2\rangle$ of the first and second wave functions or a function thereof. The function may include a real part $Re[\langle\psi_1|\psi_2\rangle]$, an imaginary part $Im[\langle\psi_1|\psi_2\rangle]$, and/or an expectation value $|\langle\psi_1|\psi_2\rangle|^2$.

The second wave function can be a combined wave function $|\psi_{1,2}\rangle$ encoding both the first and second sets of coefficients. For example, the unitary operator $\hat{U}_1$ and $\hat{U}_2$ may be used to define $|\psi_{1,2}\rangle = \hat{U}_1^\dagger \hat{U}_2|0\rangle$. The method may then comprise determining the overlap $\langle 0|\psi_{1,2}\rangle = \langle\psi_1|\psi_2\rangle$ of the combined wave function with a zero state, or a function thereof. The function may include a real part $Re[\langle\psi_1|\psi_2\rangle]$, an imaginary part $Im[\langle\psi_1|\psi_2\rangle]$, and/or an expectation value $|\langle\psi_1|\psi_2\rangle|^2$.

These kinds of overlap measurements are relatively easy to implement in hardware. The operators $\hat{U}$ used to encode the sets of coefficients into wave functions may be referred to as coefficient maps. More in general, a coefficient map may be a non-unitary encoding which may be implemented as a linear combination of unitaries. This may result in a plurality of overlaps being computed. For example, if the first set of coefficients is encoded with a sum of two unitary operators $\hat{U}_{1a} + \hat{U}_{1b}$, the resulting state is $|\psi_1\rangle\rangle = (\hat{U}_{1a} + \hat{U}_{1b})|0\rangle = |\psi_{1a}\rangle + |\psi_{1b}\rangle$. If the second set of coefficients is similarly encoded, the overlap becomes $\langle\langle\psi_1|\psi_2\rangle\rangle = \langle\psi_{1a}|\psi_{2a}\rangle + \langle\psi_{1a}|\psi_{2b}\rangle + \langle\psi_{1b}|\psi_{2a}\rangle + \langle\psi_{1b}|\psi_{2b}\rangle$. Each of these terms can then be determined as described above.

In an embodiment, determining the overlap comprises determining an expectation value $|\langle\psi_1|\psi_2\rangle|^2$ of the overlap of the first and second wave functions. Determination of the expectation value may involve performing a controlled SWAP-test and/or measuring an amplitude of a zero state of qubits encoding the first set of coefficients and/or the second set of coefficients. The controlled SWAP-test may be performed on the first wave function $|\psi_1\rangle$ and the second wave function $|\psi_2\rangle$, the first wave function being encoded in a first register and the second wave function being encoded in a second register.

In an embodiment, encoding the first and second set of coefficients comprises executing a unitary operation. The unitary operation may be controlled by an ancilla. Determining the overlap $\langle\psi_1|\psi_2\rangle$ of the first and second wave functions may comprise performing an Hadamard-test on the ancilla.

One aspect of this disclosure relates to a classical computer system or hybrid quantum computer system comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a classical computer system or hybrid quantum computer system, being configured for executing any of the methods described herein.

One aspect of this disclosure relates to a non-transitory computer-readable storage medium storing at least one software code portion, the software code portion, when executed or processed by a computer, configures the computer or hybrid computing system to perform any of the methods described herein.

As will be appreciated by one skilled in the art, aspects of the present invention may be embodied as a system, method or computer program product. Accordingly, aspects of the present embodiments may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present embodiments may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fibre, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fibre, cable, RF, etc., or any suitable combination of the foregoing. Computer program code for carrying out operations for aspects of the present embodiments may be written in any combination of one or more programming languages, including a functional or an object oriented programming language such as Java, Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present embodiments are described below with reference to flowchart illustrations and/or block diagrams of methods, apparatus (systems), and computer program products according to embodiments of the embodiments. It will be understood that each block of the flowchart illustrations and/or block diagrams, and combinations of blocks in the flowchart illustrations and/or block diagrams, can be implemented by computer program instructions.

These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present embodiments. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The embodiments will be further illustrated with reference to the attached drawings, which schematically will show embodiments according to the invention. It will be understood that the invention is not in any way restricted to these specific embodiments. Identical reference signs refer to identical, or at least similar elements.

Brief description of the drawings

**Fig. 1A** schematically depicts a known method to solve a differential equation and **Fig. 1B** and **1C** schematically depict a method to solve a differential equation according to an embodiment;

**Fig. 2A** is a flowchart of a method according to an embodiment and **Fig. 2B** is a flowchart of a corresponding example;

**Fig. 3A** shows circuit diagrams for adder and subtractor circuits and **Fig. 3B** shows a circuit diagram for a modulo circuit;

**Fig. 4A** and **4B** show results of a solution of a linear differential equation obtained with a method according to an embodiment;

**Fig. 5A-5D** show results of solving a linear differential equation obtained with a method according to an embodiment;

**Fig. 6A** and **6B** show results of solving a non-linear differential equation obtained with a method according to an embodiment;

**Fig. 7A** and **7B** show results of a solution of a multidimensional differential equation obtained with a method according to an embodiment.

**Fig. 8A-H** depict circuit diagrams for evaluating an overlap, respectively a derivative thereof, according to various embodiments;

**Fig. 9A-C** schematically show quantum circuits for an amplitude Chebyshev feature map, a Fourier feature map, and a Chebyshev-grid-based spectral feature map, respectively;

**Fig. 10A** and **10B** schematically show quantum circuits for a quantum Fourier transform and a quantum Chebyshev transform, respectively;

**Fig. 11A-C** schematically show differentiated feature maps according to embodiments;

**Fig. 12A-E** schematically depict hardware-level schematics illustrating the application of logical operations to qubits using a quantum circuit;

**Fig. 13A** and **13B** depict systems describing a Digital-Analog implementation of a quantum algorithm and a quantum feature map, respectively; **Fig. 13C** illustrates pulses corresponding to the quantum feature map;

**Fig. 14A** and **14B** present quantum circuits based on a Digital-Analog implementation of quantum circuits;

**Fig. 15A** and **15B** present quantum circuits based on a Digital-Analog implementation of quantum circuits;

**Fig. 16** presents a workflow for generalized circuit differentiation for use in an embodiment; and

**Fig. 17A** and **17B** are block diagrams illustrating, respectively, an exemplary hybrid data processing system and an exemplary classical data processing system that may be used for executing methods and software products described in this disclosure.

Detailed description

The embodiments in this disclosure generally relate to improved schemes for solving differential problems using a quantum model, based on encoding coefficients with respect to a selected set of basis functions. In particular, some embodiments relate to a quantum machine learning model for that can be trained to learn a solution to a differential problem.

Known quantum algorithms to solve differential equations can be categorised by how the dependence on the independent variable of the differential equation is encoded in the trial function. One choice is amplitude encoding, with which the $2^n$ amplitudes of an *n*-qubit state are used to represent the value of the function at a set of $2^n$ points. This enables the exponential state space to encode an exponential number of collocation points. This is of great use as one of the limiting factors of current differential equation solvers is coping with increasing number of collocation points, especially as the dimension of the differential problem increases (a phenomenon known as the curse of dimensionality). However the function cannot be evaluated away from those points and numerical derivatives are used, introducing numerical errors. Furthermore, full state tomography is required to access the full function.

Another commonly used encoding is feature map encoding. Here, a circuit is used in the function definition which has parameters dependent on the encoding variable. Using this encoding leads to functions which can be evaluated at any point (at least in principle). Evaluating the function at a point requires an evaluation such as an expectation or overlap in comparison to tomography. Moreover, via techniques such as the parameter shift rule, analytic derivatives can be determined, so that numerical errors are can be avoided. On the other hand, using this encoding means separate circuit evaluations are needed for each point of interest — in particular separate evaluations for each collocation point. This brings back the issue of scaling with collocation points and the curse of dimensionality.

It is noted that this classification of quantum algorithms to solve differential equations is related, but not identical to classification in variational solvers and solvers based on linear systems of equations (LSEs). It is more common for LSE methods to utilise amplitude encoding and for variational methods to use feature map encoding but, there are exceptions to this general association.

The embodiments described herein may avoid or at least reduce the effects of the dimensionality problem. During the optimisation phase (also referred to as training), no separate evaluations for a set of collocation points (training points) is required. This can be combined with access to analytic derivatives, avoiding errors due to numerical errors. Furthermore, the value of the resultant function (typically referred to as the solution) can be accessed at any point.

This is achieved by expressing a trial function as an overlap between a quantum state or sum of quantum states defined by a feature map encoded by an independent variable of the differential problem state and a quantum state ort a sum of quantum states prepared by a variational Ansatz. This results in a feature-map-encoded function and therefore possesses the traits of such an encoding. If the feature map obeys certain constraints, trial function derivatives, arbitrary (known) functions of the independent variable, and products of functions can all be expressed as a sum of overlaps between the same feature map encoded state and other (variational) states.

With such a representation, the whole differential equation can be represented in such a way that the encoding of the independent variable is separable from the encoding of the variational parameters. Therefore, during the training, the independent variable can be separated out, and a solution may be determined that is independent from the independent variable. In particular, if a loss function is used for optimisation, the loss function is independent of the independent variable. Thus, there is no need to evaluate at a set of training points. Conceptually, this can be seen as parallel training for all training points.

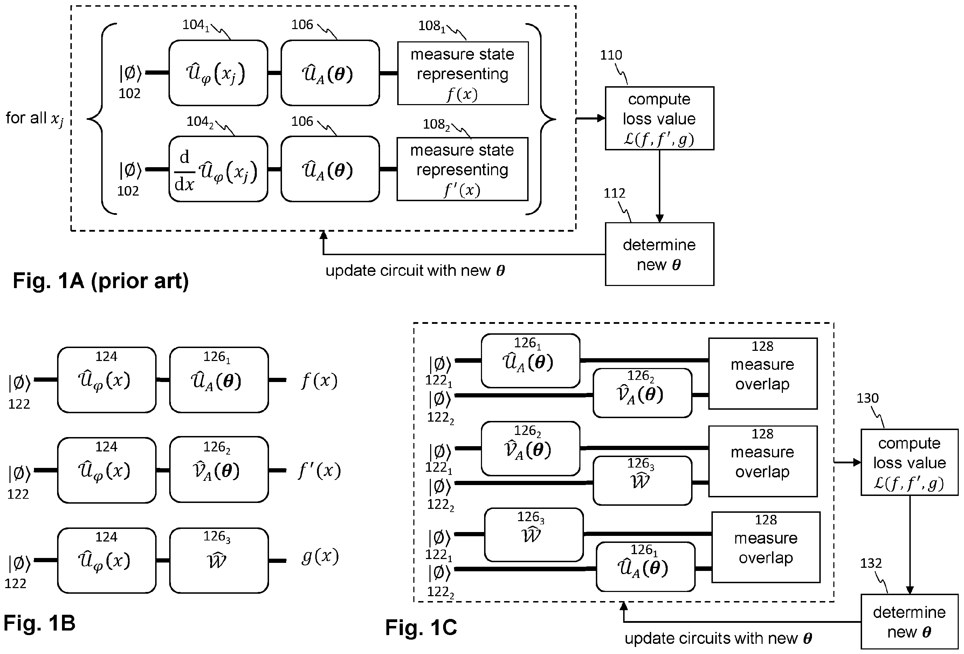

**Fig. 1A** schematically depicts a known method to solve a differential equation. The shown method is based on variational solving the problem using differentiable quantum circuits (DQC). As shown in the figure, the quantum model for the parametrised target function $f_\theta(x)$ may be represented by a quantum circuit including a feature map $\hat{U}_\varphi(x)$ for encoding an independent variable x into the Hilbert space of a quantum register **102,** and a variational Ansatz $\hat{U}_A(\boldsymbol{\theta})$ **106,** parameterized by trainable parameters $\theta$. Thus, one can write:

$$f_{\boldsymbol{\theta}}(x) = \left\langle 0 \middle| \hat{U}_\varphi^\dagger(x)\, \hat{U}_A(\boldsymbol{\theta}) \middle| 0 \right\rangle. \tag{1}$$

The derivative of the target function is obtained by differentiating the feature map, and using the same variational Ansatz:

$$f_{\boldsymbol{\theta}}'(x) = \left\langle 0 \middle| \left(\frac{\mathrm{d}}{\mathrm{d}x} \hat{U}_\varphi^\dagger(x)\right) \hat{U}_A(\boldsymbol{\theta}) \middle| 0 \right\rangle. \tag{2}$$

The feature map $\frac{\mathrm{d}}{\mathrm{d}x} \hat{U}_\varphi(x)$ is also referred to as the differentiated feature map.

A solution to the differential equation is found by variationally optimizing the trainable parameters $\theta$. The quantum circuits may include sequences (layers) of quantum gates which may be executed on the quantum register. Here, the only dependence on the input value (independent variable) is in the feature map; the variational Ansatz is independent of the input value x; and conversely, the feature map is independent of the trainable parameters $\theta$.

The training of the quantum model may be based on an optimization scheme, wherein after initialisation of the variational parameters, the gate operations of the quantum circuit may be executed, and the state of the quantum register may be measured using a cost function. Based on measured states $108_{1,2}$, a loss value may be computed based on a loss function (block **110).** The loss function is based on the differential equation. For example, if the differential equation reads:

$$a\, f'(x) - b\, f(x) - g(x) = 0, \qquad\qquad (3)$$

(wherein $g(x)$ is a known function of x), then the loss function contains a contribution based on measurements **108,** representing $f(x)$ and a contribution based on measurements $108_2$ representing $f'(x)$. The scaling factors $a$ and $b$ and the known function $g(x)$ can be included by the (classical) optimiser without any quantum measurements. As the feature map encodes only a single x-value at a time, the loss function comprises a sum over a number of collocation points $x_j$. For the above example differential equation, the loss function may be:

$$\mathcal{L}_{\mathrm{DE}}(\boldsymbol{\theta}) = \sum_j \left( a\, \hat{\mathcal{C}}\left[\left(\frac{\mathrm{d}}{\mathrm{d}x}\hat{\mathcal{U}}_\varphi^\dagger(x)\right)\hat{\mathcal{U}}_A(\boldsymbol{\theta})\right] - b\, \hat{\mathcal{C}}\left[\hat{\mathcal{U}}_\varphi^\dagger(x_j)\,\hat{\mathcal{U}}_A(\boldsymbol{\theta})\right] - g(x_j) \right) \qquad (4)$$

where $\hat{\mathcal{C}}$ denotes some cost operator used in the measurement of the quantum state. (In practice, the loss function may also contain a contribution for a boundary condition, which is omitted here for simplicity.) Thus, the number of quantum evaluations needed to evaluate the loss function is (roughly) proportional to the number of collocation points times the number of derivatives (including the zeroth derivative, or base function).

If the loss value does not meet one or more optimization conditions, the variational parameters may be updated by an optimizer **112.** Thereafter, the quantum circuit may be executed using the updated variational parameters and the state of the quantum registered may be measured and a new loss value may be computed. These steps may be repeated until the one or more optimization conditions are met. The state of the optimized quantum circuit may represent an optimized approximation of a desired target function.

The logic gates of the quantum circuits used in the quantum machine learning scheme are parameterized by a set of trainable parameters $\theta$ which are subsequently trained by a classical optimizer to maximize or minimize a loss function. These parametrized quantum circuits can be used as quantum machine learning models, applied to applications such as learning or generating an unknown distribution from a set of input features or solving differential equations.

**Fig. 1B** and **1C** schematically depict a method to solve a differential equation according to an embodiment. In particular, **Fig. 1B** schematically depicts encodings for the primitive elements of the example differential equation in eq. (3). Here, the primitive elements are:

$$f_{\boldsymbol{\theta}}(x) = \left\langle 0\middle|\hat{\mathcal{U}}_\varphi^\dagger(x)\,\hat{\mathcal{U}}_A(\boldsymbol{\theta})\middle|0\right\rangle \qquad\qquad (5)$$

$$f_{\boldsymbol{\theta}}'(x) = \left\langle 0\middle|\hat{\mathcal{U}}_\varphi^\dagger(x)\,\hat{V}_A(\boldsymbol{\theta})\middle|0\right\rangle \qquad\qquad (6)$$

$$g(x) = \left\langle 0\middle|\hat{\mathcal{U}}_\varphi^\dagger(x)\,\hat{W}\middle|0\right\rangle \qquad\qquad (7)$$

There are various differences with the known model described above with reference to Fig. **1A.** For one, an encoding for the known function g(x) has been added, which was not necessary for the described prior art method. Second, the three primitive elements are all encoded using the same feature map **124** represented by $\hat{\mathcal{U}}_\varphi(x)$, whereas in **Fig. 1A,** the 'normal' feature map $104_1$ was used to encode $f(x)$, and a different feature map $104_2$, *viz.,* the differentiated feature map, was used to encode $f'(x)$. Third, **Fig. 1A** used the same variational Ansatz **106** for both the target function itself and for the derivative of the target function, but in the current method, different (variational) circuits $126_{1\text{-}3}$ are used for the different primitive elements. As g(x) is a known function, the corresponding coefficient encoding $126_3$ represented by $\hat{W}$ is not parametrised.

It is noted that for the current method, in principle, the feature map 124 itself is not needed to solve the differential problem; however, the feature map is necessary to evaluate the primitive elements (which is typically required to handle boundary conditions). However, the choice of feature map determines the relation between the coefficient encoding circuits $126_{1\text{-}3}$, which must be chosen such that they define the desired elements with respect to a same set of basis functions. How these coefficient encoding circuits may be determined will be discussed in more detail below.

**Fig. 1C** schematically shows how the differential problem may be solved using a method according to an embodiment. For each pair of coefficients encoded by the coefficient encoding circuits $126_{1\text{-}3}$, an overlap is measured **128.** Based on the measured overlaps, a loss value is determined **130** using a loss function. The loss function depends again on the differential equation, and will be described in more detail below. In general, the loss function comprises a contribution:

$$\mathcal{L}_{\mathrm{DE}}(\boldsymbol{\theta}) = a\,b\,\mathrm{Re}\big[\langle 0|\hat{\mathcal{U}}_{\mathrm{A}}^{\dagger}(\boldsymbol{\theta})\,\hat{\mathcal{V}}_{A}(\boldsymbol{\theta})|0\rangle\big] + a\,\mathrm{Re}\big[\langle 0|\hat{\mathcal{V}}_{\mathrm{A}}^{\dagger}(\boldsymbol{\theta})\,\hat{\mathcal{W}}|0\rangle\big] + b\,\mathrm{Re}\big[\langle 0|\hat{\mathcal{W}}^{\dagger}\,\mathcal{U}_{A}(\boldsymbol{\theta})|0\rangle\big]. \quad (8)$$

More in general, the loss function comprises contributions based on overlaps of each pair of quantum states corresponding to a set of coefficients with respect to a set of basis function associated with the feature map. This loss function is independent of the input variable x. Instead, the number of quantum evaluations needed to evaluate the loss function is (roughly) proportional to the square of the number of terms in the differential equation. In some cases, each primitive element is represented by a sum of, e.g., 2 or 4 quantum states; in such cases, the number of quantum evaluations may scale with roughly the square of, e.g., 2-4 times the number of terms; or more in general, with the number of combinations of pairs of quantum states used to encode the differential equation.

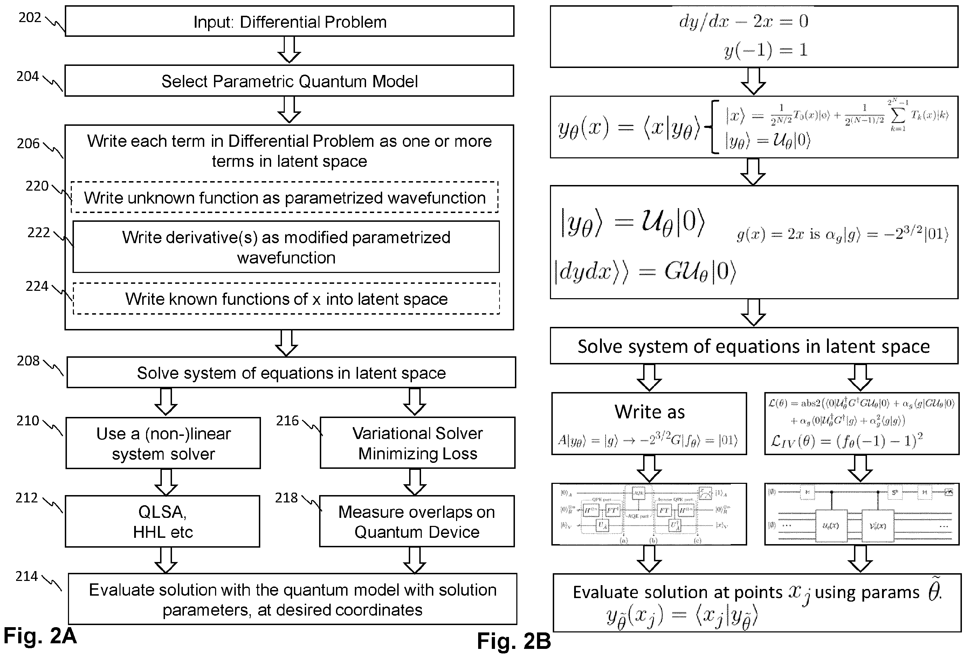

**Fig. 2A** is a flow chart of a method according to an embodiment. In a first step **202,** a differential problem is provided or generated as input. The differential problem may comprise one or more differential equations and, optionally, one or more boundary conditions.

An optional step **204** comprises selecting a parametric quantum model. This step may be implicit. Selecting the parametric quantum model may comprise choosing a set of basis functions for encoding an independent variable of the differential problem, selecting a variational Ansatz, et cetera. The parametrized quantum model models at least one differential equation of the differential problem.

Based on the selected model, an optional step **206** may comprise writing each term of a differential equation of the differential problem as one or more terms in a latent space. This may comprise a step **220,** comprising writing an unknown function of the differential equation as a parametrized wavefunction, a step **222** comprising writing one or more (first-order and/or higher-order) derivatives of the unknown function with respect to the independent variable as modified parametrized wavefunctions, and a step **224** comprising writing one or more known functions as wavefunctions.

A subsequent step (not shown) may comprise receiving or determining one or more quantum circuits defining operations of the parameterized quantum model. The operations effectuate the encoding determined in the previous step.

A step **208** comprises solving one or more equations in the latent space. This may comprise a step **210** comprising selecting a (non)-linear system solver and a step **212** comprising implementing the selected (non)-linear system solver, e.g., QLSA, HHL, et cetera on a quantum processor; and/or a step **216** comprising selecting a variational solver and a step **218** comprising measuring overlaps on a quantum processor.

An optional step **214** comprises evaluating the determined solution, using the quantum model and solution parameters, at one or more input points.

In the following, a general approach is described. The goal of the algorithm is to solve a system of $D$ differential equations $DE_j$:

$$DE_j\left(\boldsymbol{x}, \boldsymbol{f}, \frac{\mathrm{d}\boldsymbol{f}}{\mathrm{d}\boldsymbol{x}}, \frac{\mathrm{d}^2\boldsymbol{f}}{\mathrm{d}\boldsymbol{x}^2}, \dots\right) = 0 \text{ for } j = 1\colon D. \quad (9)$$

In particular, a goal is to train a solution $f_\theta(x)$ which can be evaluated at any input point but which does not need to be evaluated explicitly at a set of training points during training. As an initial example, a case with D = 1 is considered for first order derivatives, and one dimension of both dependent and independent variables i.e., $DE(x, f, df/dx) = 0$. The details on how to generalise to higher dimensions are described below.

The first step is to note that the differential equation can be written as

$$DE\left(x, f, \frac{\mathrm{d}f}{\mathrm{d}x}\right) = \sum_{k=1}^{T} DE^k\left(x, f, \frac{\mathrm{d}f}{\mathrm{d}x}\right) = 0 \quad (10)$$

where $DE^k(x, f, df/dx)$ represents the $k^{\text{th}}$ term of the differential equation, and where $T$ denotes the number of terms in the differential equation. Each term may contain a single product of primitive elements such as $f$, $df/dx$, and/or an arbitrary function of $x$ (including constants). The trial function is posited as:

$$f_\theta(x) = \theta_s \langle x | f_\theta \rangle \qquad\qquad (11)$$

where $|x\rangle$ is a state encoded by the variable x. Typically, $|x\rangle = \hat{\mathcal{U}}(x)|0\rangle$, = where the unitary operator $\hat{\mathcal{U}}(x)$ is referred to as the feature map. With this trial function, each term $DE^k$ can be expressed as:

$$DE^k(x, f_\theta, df_\theta/dx) = \langle \tilde{x} | DE_\theta^k \rangle\rangle \qquad\qquad (12)$$

$$|DE^k\rangle\rangle = \sum_{j=1}^{t_k} \alpha_j \left| de_\theta^{k,j} \right\rangle \qquad\qquad (13)$$

where $|\tilde{x}\rangle$ is the same for all terms. In general, $|\tilde{x}\rangle$ may differ from $|x\rangle$, for example for non-linear differential equations (as explained in more detail below). In this disclosure, double-ket notation $|\cdot\rangle\rangle$ is used to notate a sum of states with coefficients (this includes a single state), i.e., $|\psi\rangle\rangle = \Sigma_i c_i |\psi_i\rangle$. The expression in eq. (12) is such that the x-dependence is the same for all terms and is separable from the variational parameters. The details on how to construct the appropriate $|DE_\theta^k\rangle\rangle$ with tunable parameters are explained in the following section. Substituting the expression (12) into (10) gives:

$$DE(x, f_\theta, df_\theta/dx) = \langle \tilde{x} | \sum_{k=1}^{T} |DE_\theta^k\rangle\rangle = 0 \qquad\qquad (14)$$

for all x. Restricting $|\tilde{x}\rangle$ such that the amplitudes are independent, (14) is satisfied and the differential equation is solved if and only if $\sum_{k=1}^{T} |DE_\theta^k\rangle\rangle$. If the restriction on $|\tilde{x}\rangle$ is not in place then $\sum_{k=1}^{T} |DE_\theta^k\rangle\rangle$ is sufficient but not necessary, so some solutions could be missed.

Therefore by constructing $|DE_\theta^k\rangle\rangle$ for each DE term with variational parameters the solution can be trained for by minimising the loss function

$$\mathcal{L}_{DE}(\theta) = \sum_{k=1}^{T} \langle\langle DE^k | \sum_{l=1}^{T} |DE^l\rangle\rangle = \sum_{k=1}^{T}\sum_{l=1}^{T}\sum_{m=1}^{t_k}\sum_{n=1}^{t_l} \alpha_m^k \alpha_n^l \langle de^{k,m} | de^{l,n} \rangle. \qquad\qquad (15)$$

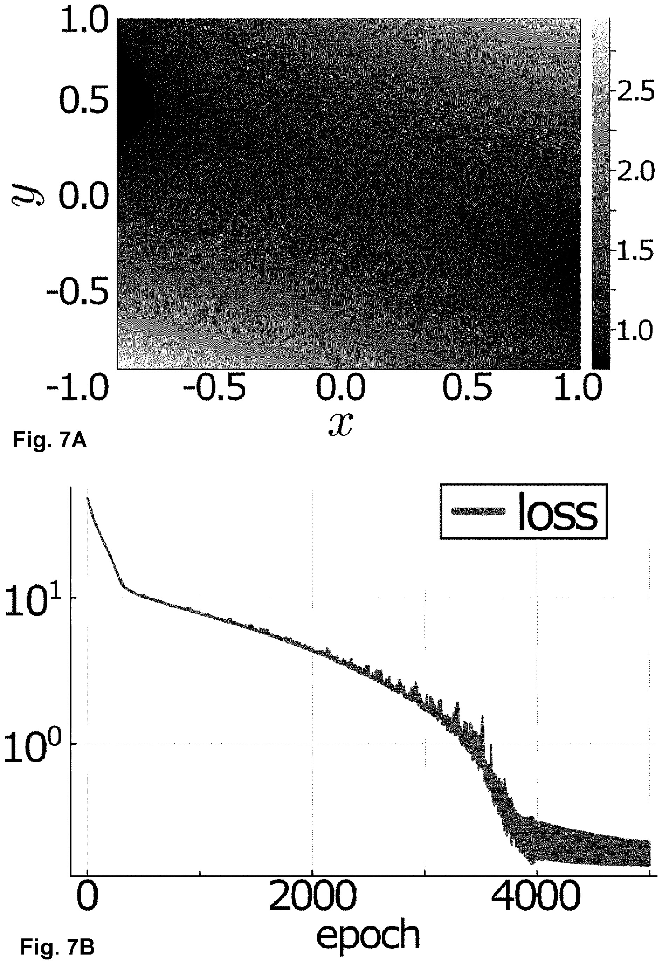

To evaluate this loss function, overlaps between prepared quantum states are measured and then classically post processed. For gradient-based optimisation methods, derivatives of these overlaps with respect to the variational parameters are required. These measurements can be implemented with modified Hadamard tests as shown in Fig. 7.

A differential problem to be solved usually comprises a differential equation and a given boundary condition or initial value $f(x_0) = f_0$. Optimising the loss function $\mathcal{L}_{DE}$ as defined in eq. (15) leads to a solution for the differential equation that in general does not obey the boundary condition or the specified initial value. For a specific initial value, an additional loss term can be introduced of a distance measure between $f_\theta(x_0)$ and $f_0$. For example, using the mean square error for the distance, this loss term becomes

$$\mathcal{L}_{\text{init}}(\theta) = (f_\theta(x_0) - f_0)^2 \qquad\qquad (16)$$

For this, the trial function does have to be evaluated but at a single point rather than a set of training points. The total loss is then a function $\mathcal{F}$ of the loss function for the differential equation and the loss function for the boundary condition(s) $\mathcal{L}_{\text{BC}}(\theta)$:

$$\mathcal{L}(\theta) = \mathcal{F}\big(\mathcal{L}_{DE}(\theta), \mathcal{L}_{\mathrm{BC}}(\theta)\big) \qquad (17)$$

The function $\mathcal{F}$ is typically a positive, monotonically increasing function in each of its arguments. For example, a weighted sum may be used. Generalisation to more than one boundary condition / initial condition is straightforward.

The overall workflow for the algorithm is then:

1. receive or determine differential equation to solve, optionally with one or more boundary conditions;
2. select hyper-parameters and set-up, such as x encoding, variational Ansatz and optimiser to use;
3. separate the differential equation into separate terms independent of the independent variable; i.e., determine $|DE\rangle\rangle$ such that $\langle x|DE\rangle\rangle = 0$ represents the differential equation;
4. receive or determine circuits to prepare relevant state(s) associated with each separate term of the differential equation;
5. compute overlaps between terms; and
6. optimise loss.

To recap, the method considers each term of the differential equation as product of functions on our model space. These functions, and therefore the terms of the differential equation, can be represented in a latent space as a sum of states which, when overlapped with an encoding of x can be evaluated for the function. The loss of the differential equation can then be constructed as the sum of all overlaps between the states representing the terms of the differential equation. Optionally, an initial value can be considered by evaluating $f_\theta(x)$ at the initial point and taking its distance from the target initial value.

As an alternative from considering a variational procedure, using the same understanding of operators representing terms of differential equation the problem can be written as a system of equations. Using the reasoning as before the problem can be considered as solving

$$\sum_{k=1}^{T} \big|DE^k\big\rangle\rangle = 0 \qquad (18)$$

First assuming a linear problem with no cross products between functions of the independent variable and the trial function each term can either be understood as a matrix acting on the coefficients of the trial function $D_j\boldsymbol{f}$ (the terms which are functions of the trial function) or a vector of the coefficient representing that term $g_j$ (the terms which are functions of the independent variable). This yields

$$\sum_j D_j \boldsymbol{f} = \sum_j g_j \to D\boldsymbol{f} = \boldsymbol{g} \qquad (19)$$

This can then be solved with an appropriate solver for solving linear systems of equations. Solving linear system of equations is a promising use case for future Quantum supremacy with algorithms such as HHL and its variations promising to be able to provide a speed-up over classical solvers.

A vital component of this algorithm is being able to prepare $\big|DE_\theta^k\big\rangle\rangle$ for the various terms that can exist in the differential equation. The basis for the preparation is how we represent the x dependence via a feature map

$$|x\rangle = \hat{U}(x)\,|0\rangle \qquad (20)$$

By choosing $\hat{U}(x)$ the effective basis functions of the model are chosen. Certain limitations on $\hat{U}(x)$ may be imposed such that states associated with various primitive elements, such as derivatives with respect to x, functions of x, and products can be prepared. An initial restriction we impose is that $\hat{U}(x)\,|0\rangle$ is such that the effective basis functions are independent - this is so that the assertion that (14) is solved if and only if $\sum_{k=1}^{T} |DE^k\rangle\rangle = 0$ holds.

First a method to prepare $\big|DE_\theta^k\big\rangle\rangle$ for the trial function, derivatives, (known) functions of x and products of functions for general choice of $\hat{U}(x)\,|0\rangle$ is discussed. Subsequently, the specific preparations for two choices of encoding are expanded upon.

As mentioned above, the trial function can be expressed as

$$f_\theta(x) = \langle x | f_\theta \rangle\rangle \tag{21}$$

$$\text{e.g., } f_\theta(x) = \theta_s \langle x | f_\theta \rangle = \theta_s \langle x | \hat{U}_\theta | 0 \rangle \tag{22}$$

where $\hat{U}_\theta$ is a variational Ansatz to be chosen and $\theta_s$ represents a variational parameter which scales the function. Thus, when a term $DE_k$ of the differential equation is simply the primitive element $I$, then the associated $|DE\rangle\rangle$ equals $|f_\theta\rangle\rangle$ (or in the example from eq. (22): $\theta_s \hat{U}_\theta | 0 \rangle\rangle$.

From (21), it can be seen how the encoding is directly related to the set of basis functions.

$$|x\rangle = \left( \alpha_0(x), \alpha_1(x), \ldots, \alpha_{N-1}(x) \right)^{\mathrm{T}} \tag{23}$$

$$|f_\theta\rangle = \left( f_0, f_1, \ldots, f_{N-1} \right)^{\mathrm{T}} \tag{24}$$

$$\langle x | f_\theta \rangle = \sum_{j=0}^{N-1} f_j \bar{\alpha}_j(x). \tag{25}$$

Here, $\bar{\alpha}_j$ represents the complex conjugate of $\alpha_j$, and $N$ is the number of available basis states (usually $N = 2^n$ where $n$ is the number of qubits in the quantum register).

As the overall goal is to solve differential equations, at least one primitive element will involve a derivative of the trial function; this can be a first-order derivative and/or a higher-order derivative. Taking the derivative of (21) yields:

$$f_\theta'(x) = \frac{\mathrm{d}}{\mathrm{d}x} \langle x | f_\theta \rangle = \left\langle 0 \left| \hat{U}^{\dagger'}(x) \right| f_\theta \right\rangle \tag{26}$$

Training requires that all terms of the differential eqaution have the same encoding of the independent variable x, and therefore the choice of $\hat{U}(x)$ (and hence, the set of basis functions) is restricted such that $\hat{U}'(x) = G\,\hat{U}(x)$; here G is referred to as the derivative generating matrix. The matrix G must be independent of the independent variable x, but need not be unitary so long as it can be implemented in some manner (for example as a sum or difference of unitary operators). Now the derivative of the trial function can be expressed as

$$f_\theta'(x) = \theta_s \langle x | G^\dagger | f_\theta \rangle = \theta_s \langle x | f_\theta' \rangle\rangle \tag{27}$$

Therefore when a term of the differential equation comprises the primitive element df/dx, the associated term is

$$\left| DE^k \right\rangle\rangle = \theta_s\, G^\dagger\, \hat{U}_\theta\, | 0 \rangle$$

A primitive element present in many differential equations is an arbitrary (known) function of the independent variable, which in the following will be labelled g(x). To encode a differential equation with such a primitive element, the arbitrary function must expressed as

$$g(x) = \gamma \langle x | g \rangle \tag{28}$$

This can be achieved in two main ways: pre-training or transformation. Pre-training includes carrying out a separate round of regression training to find $|g\rangle$ before carrying on to training for the solution of the differential equation. This training could be done in a quantum manner by introducing a trial state $|g_\phi\rangle$ and use a quantum regression algorithm such as quantum circuit learning (QCL). Alternatively, if the basis functions (23) are known, a classical method could be used. This will result in a set of coefficients which are encoded as amplitudes of $\alpha | g \rangle$. A suitable state preparation algorithm can be utilised to prepare it as a quantum state.

Pre-training can be avoided entirely by utilising a transformation corresponding to the encoding chosen, i.e., associated with the set of basis functions. If $\hat{u}(x)$ is such that it prepares, at a set of points $\left\{x_j\right\}_{j=0}^{N-1}$, an orthonormal basis set $\left\{|x_j\rangle\right\}_{j=0}^{N-1}$, there exists a unitary transform $\hat{u}_T$ that transforms between the encoding basis and the computational basis. Using this transform on g(x) results in

$$g(x) = \gamma \, \langle x | \hat{u}_T^\dagger \, \hat{u}_T | g \rangle = \gamma \, \langle \tilde{x} | \tilde{g} \rangle \tag{29}$$

As the transform was utilised $|\tilde{x}\rangle$ is now the computational basis when evaluated at $\left\{x_j\right\}_{j=0}^{N-1}$ and consequently, the amplitudes of $\gamma \, |\tilde{g}\rangle$ are the value of the circuit at those points. This can be reversed to prepare $\gamma |g\rangle$. First, using the target $g(x)$, $y|\tilde{g}\rangle$ can be written as a scale factor and a classical normalised vector. Then, a state preparation algorithm can be utilised to prepare $|\tilde{g}\rangle$ as a quantum state. Finally $\hat{u}_T^\dagger$ is applied to get $|g\rangle$.

Therefore when a term $DE^k$ of the differential equation is $g(x)$, the associated $|DE^k\rangle\rangle = y\,|g\rangle$. No variational parameters for differential equation training are present.

With the knowledge of how to construct the various primitive elements of the differential equation $-f(x), f'(x), g(x)$, et cetera — it is possible to prepare states which represents the product of primitive elements.

First we consider the basis functions of eq. (23) and how to expand the product of two functions in terms of these basis functions:

$$g(x) = \langle x | g \rangle \rangle, \qquad h(x) = \langle x | h \rangle \rangle \tag{30}$$

$$g(x) = \sum_j g_j \, \alpha_j(x), \qquad h(x) = \sum_k h_k \, \alpha_k(x) \tag{31}$$

$$g(x)h(x) = \sum_j \sum_k g_j \, h_k \, \alpha_j(x) \, \alpha_k(x) \tag{32}$$

So, the product of two functions which both are expressed in a basis of $\{\alpha_j(x)\}$ can now be written in terms of products of basis functions $\{\alpha_j(x)\alpha_k(x)\}_{j,k}$. In general, the set $\{\alpha_j(x)\alpha_k(x)\}_{j,k}$ may not be unique or independent so a set $\{\beta_j(x)\}_j$ is considered, which is independent and contains $\{\alpha_j(x)\alpha_k(x)\}_{j,k}$. For practical reasons, the set $\{\beta_j(x)\}_j$ may be padded to be of size a power of two.

The state with amplitudes of these functions is denoted $|xx\rangle$ and so, the products can be written in terms of

$$g(x)h(x) = \langle xx | gh \rangle = \Sigma_j (gh)_j \, \beta_j(x) \tag{33}$$

In general, the set of basis functions encoded by $|xx\rangle$ can differ from the set of basis functions encoded by $|x\rangle$, and a different encoding circuit may be needed. However the encoding circuits are typically closely related, as will be shown for some explicit examples below. Furthermore, when $|xx\rangle$ does differ from $|x\rangle$, it is still necessary to be able to represent every term of the differential equation relative to the same set of basis functions. This can be achieved in several ways. For example, any single-factor terms (e.g., $f(x)$ by itself) can be multiplied with a unity function h(x) = 1, resulting in a product terms. Thus, all terms can be expressed via $|xx\rangle$ instead of $|x\rangle$.

The above shows how to express $g(x)h(x)$ in terms of $|xx\rangle$; the following will show how to prepare $|gh\rangle\rangle$ from $|g\rangle\rangle$ and $|h\rangle\rangle$. By using the expansions

$$\alpha_j(x)\alpha_k(x) = \sum_{l=0}^{\tilde{N}-1} c_l^{j,k}\,\beta_l(x), \tag{34}$$

and substituting into (32) for:

$$g(x)\,h(x) = \sum_{j}\sum_{k}\sum_{l=0}^{\tilde{N}-1} g_j\,h_k\,c_l^{j,k}\,\beta_l(x) = \sum_l (gh)_l\,\beta_l(x), \tag{35}$$

the linear relation between $\{g_j h_k\}_{j,k}$ and $\{(gh)_l\}_l$ can be seen. Therefore, a matrix $M$ can be expressed such that $|gh\rangle\rangle = M|g\rangle\rangle\,|h\rangle\rangle$. The implementation of $M$ alters based on the choice of the set of basis functions, and hence on the enocding operator $\hat{\mathcal{U}}(x)$. Some specific examples will be shown below.

For the sake of readability, in the above a method to obtain a solution for a first-order, one-dimensional differential equation has been described. However, many differential equations of interest have more general forms. The following indicates in brief generalisations to higher-order derivatives, multi-dimensional variables, and higher-order non-linearities.

For higher order derivatives the process to take the first derivative is repeated for

$$f_\theta^m(x) = \langle x|\left(G^\dagger\right)^m\big|f_\theta\rangle\rangle = \langle x|f_\theta^m\,\rangle\rangle. \tag{36}$$

For systems of differential equations each differential equation in the system is treated the same as the case of a single differential equation and the loss itself is altered. The new loss is the sum of contributions from each differential equation:

$$\mathcal{L}(\theta) = \sum_{j=1}^{D}\left(\sum_{k=1}^{T}\langle\langle DE_j^k|\sum_{l=1}^{T}|DE_j^l\rangle\rangle\right). \tag{37}$$

When there are higher dimensions of independent variables x, the initial encoding can be altered to take contributions from all of the variables. This can be done by encoding each variable with its own encoding circuit acting on consecutive registers. E.g., for two variables, the trial function can be written as:

$$f_\theta(x,y) = \langle x|\langle y|f_\theta\rangle\rangle. \tag{38}$$

The transform operator is then given by $\bigotimes_j \hat{\mathcal{U}}_{\mathrm{T}}^j$ where $\hat{\mathcal{U}}_{\mathrm{T}}^j$ is the transform for the $j$th encoding. Similarly for derivatives, taking the derivative with respect to the $j$th variable can be implemented by acting on the $j$th register with $G_j^\dagger$, the associated derivative operator for the $j$th encoding. The multiplier circuit would have to be constructed for the choices in encoding. Other options will be readily apparent for the skilled person.

The multiplication so far introduced considers two functions being multiplied, generally however more functions than that can be multiplied to form a term of the differential equation. To generalise to this the new basis for more multiples of the basis function is applied and the appropriate multiplier function $M$ formulated.

Other non-linearities may be approximated using, e.g., a Taylor expansion of the non-linear function. Divisions may be solved by multiplying through the denominator, typically resulting in one or more multiplications which can be handled as described above.

In principle, any encoding and corresponding set of basis functions that has the properties shown above can be used. In the following, two specific examples are discussed in more detail: Fourier encoding and Chebyshev encoding. The corresponding components and circuits $\hat{\mathcal{U}}(x)$, $\hat{\mathcal{U}}_T$, G, M are also introduced.

The Chebyshev polynomials have known good behaviour for regression and fitting tasks. Therefore, as an example, an encoding is introduced which leads to effective basis functions of the Chebyshev polynomials of the first kind

$T_k(x) = \cos(k \arccos x)$ for $x \in [-1,1]$. The feature map introduced in co-pending application EP23182499.6 -which is hereby incorporated by reference in its entirety- prepares a state:

$$|x\rangle = \frac{1}{\mathcal{N}_N(x)} \left( \frac{1}{\sqrt{N}} T_0(x)|\emptyset\rangle + \frac{\sqrt{2}}{\sqrt{N}} \sum_{k=1}^{N-1} T_k(x) |k\rangle \right) \tag{39}$$

$$\mathcal{N}_N(x) = \frac{\sqrt{2}}{\sqrt{N}} \left( \frac{1}{2} + \sum_{j=1}^{N-1} T_j(x)^2 \right)^{1/2} \tag{40}$$

Here, $N$ denotes the number of Chebyshev polynomials, which is typically $N = 2^n$ where $n$ is the number of qubits of the quantum processor, and $\mathcal{N}_N(x)$ is a normalisation factor. In order to use the Chebyshev polynomials themselves as the basis functions (and not polynomials re-scaled by $\mathcal{N}_N(x))$, the trial function may be chosen as

$$f_\theta(x) = \mathcal{N}_N(x) \, \theta_s \, \langle x|f_\theta\rangle \tag{41}$$

The addition of the normalisation factor $\mathcal{N}_N(x)$ leads to a trial function that has a pre-factor that is dependent on the independent variable. However, as the independent variable x remains separable from the parameters $\theta$, and as all relevant terms can be written as an overlap with $\mathcal{N}_n(x) \langle x|$, eq. (41) represents a valid expression for the algorithm.

The derivative can be implemented using known properties of the Chebyshev polynomials. It is known that $T_k'(x) = k \, U_{k-1}(x)$ where $U_k(x)$ are Chebyshev polynomials of the second kind. This can then be further expanded to

$$T_0'(x) = 0 \tag{42}$$

$$T_{2k}'(x) = 2 \, (2 \, k) \sum_{m=1}^{k} T_{2m-1}(x) \tag{43}$$

$$T_{2k+1}'(x) = 2 \, (2 \, k + 1) \sum_{m=1}^{k} T_{2k}(x) + (2k + 1) \, T_0(x) \tag{44}$$

Therefore for all Chebyshev polynomials we can write the derivative expansions

$$T_k'(x) = \sum_{j=0}^{N-1} \alpha_j^k \, T_j(x) \tag{45}$$

From this, a derivative operator G can be extracted such that

$$\frac{\mathrm{d}}{\mathrm{d}x} \mathcal{N}_N(x) \, |x\rangle = G \, \mathcal{N}_N(x) \, |x\rangle \tag{46}$$

$$G_{i,j} = c_j \, \alpha_j^i \tag{47}$$

$$c_0 = \frac{1}{\sqrt{2}}, \; c_j = 1 \; (j > 0) \tag{48}$$

The scaling of $C_j$ results from the different co-efficient of $T_0(x)$ compared to the other terms of $|x\rangle$. This G is a non-unitary matrix that can be implemented via techniques such as linear combination of unitaries (LCU) and embedding in higher-order space. With this, the derivative can be expressed as:

$$f'_\theta(x) = \mathcal{N}_N(x) \langle x | G^\dagger | f_\theta \rangle \qquad (49)$$

At the Chebyshev nodes $\{x_j^{\mathrm{Ch}}\}_{j=0}^{N-1}$, $x_j^{\mathrm{Ch}} = \cos\left(\frac{2j+1}{2N}\pi\right)$ the set of states prepared by the Chebyshev encoding at these points $\{\mathcal{N}_N(x_j^{\mathrm{Ch}}) | x_j^{\mathrm{Ch}} \rangle\}_{j=0}^{N-1}$ form an orthonormal basis, which is called the Chebyshev basis. Therefore, there exists an operator $\hat{\mathcal{U}}_{\mathrm{QChT}}$ which transforms between the computational basis and the Chebyshev basis. This operator is described in more detail in EP23182499.6, and allows function values at $\{x_j^{\mathrm{Ch}}\}_{j=0}^{N-1}$ to be related to amplitudes of a state via

$$g(x) = \mathcal{N}_N(x) \langle x | \hat{\mathcal{U}}_{\mathrm{QChT}} \hat{\mathcal{U}}_{\mathrm{QChT}}^\dagger | g \rangle \qquad (50)$$

The multiplier can be determined using the multiplication rules of the Chebyshev polynomials:

$$T_j(x) T_k(x) = \left( T_{j+k}(x) + T_{|j-k|}(x) \right)/2 \qquad (51)$$

This relation can be used to see that the function basis of the product of two functions expressed in terms of Chebyshev polynomials up to $T_{N-1}$ is the Chebyshev polynomials up to $T_{2N-1}$. Therefore, the product x encoding of

$$\mathcal{N}_{2N}(x)|xx\rangle = \frac{1}{\sqrt{2N}} T_0(x) |\emptyset\rangle + \frac{1}{\sqrt{N}} \sum_{k=1}^{2N-1} T_k(x) |k\rangle \qquad (52)$$

can be used, which is the Chebyshev encoding using $n + 1$ qubits.

Using (51), the desired product $|gh\rangle$ has amplitudes

$$|gh\rangle_l = \frac{1}{\sqrt{N}} \left( \sum_{j=\max(0,l-N+1)}^{\min(l,N-1)} \frac{c_l}{c_j c_{l-j}} |g\rangle_j |h\rangle_{l-j} + \sum_{j=l}^{N-1} \frac{1}{c_j c_{j-l} c_l} \left( |g\rangle_j |h\rangle_{j-l} + |g\rangle_{j-l} |h\rangle_j \right) \right) \qquad (53)$$

where c has values $c_0 = \sqrt{2}$, $c_j = 1$ ($j \neq 0$). As above, c accounts for the different coefficient of the zeroth-order Chebyshev polynomial. Then, an operator $M$ van be found, which is able to act as:

$$M : |g\rangle|h\rangle|0\rangle \rightarrow \frac{1}{\sqrt{N}} |a\rangle \sum_{j,k} \frac{c_{j+k}}{c_j c_k} g_j h_k |j+k\rangle + \frac{1}{\sqrt{N}} |\tilde{a}\rangle \sum_{j,k} \frac{c_{|j-k|}}{c_j c_k} g_j h_k ||j-k|\rangle \qquad (54)$$

where $|a\rangle$ and $|\tilde{a}\rangle$ are ancillary states that can be discarded later. The operator $M$ can be separated into an adder part $M_+$ which prepares the summation of $|j + k\rangle$ and a subtractor part $M_-$ which prepares the subtraction of $||j-k|\rangle$. For $M_+$, an adder circuit can be used, which can be implemented in multiple ways. For example:

$$\hat{\mathcal{U}}_{\mathrm{ADD}} : |g\rangle|h\rangle|0\rangle \rightarrow \sum_{j,k} |j\rangle|k\rangle g_j h_k |j+k\rangle \qquad (55)$$

This is close to the desired result and may forms the foundations of $M_+$. First, the effects of the normalisation factor c need to be included. After the adder has been applied, an operator C is needed which acts as:

1. If $|j\rangle = 10)$ alter shift for the first input register by $\frac{1}{2}\sqrt{2}$.

2. If $|k\rangle = |0\rangle$ alter shift for the second input register by $\frac{1}{2}\sqrt{2}$.

3. If $|j + k\rangle = |0\rangle$ alter shift for the output register by $\sqrt{2}$.

To implement this, controlled $R_z$ operations are used that operate on additional ancillas. The ancillas are prepared in the uniform state. Then one controlled rotation is used for each shift: $R_z(-\pi/2)$ controlled by $|j\rangle = |0\rangle$, $R_z(-\pi/2)$ controlled by $|k\rangle = |0\rangle$, $R_z(-\pi/2)$ controlled by $|j + k) = |0\rangle$. The last of these is followed or preceded by an uncontrolled $R_z(\pi2)$. Hadamard gates are then applied to each ancilla, followed by a projective measurement onto $|0\rangle$.

$$\hat{C} : |0\rangle \sum_{j,k} |j\rangle|k\rangle g_j h_k \, |j + k\rangle \to \frac{1}{r_+} |0\rangle \sum_{j,k} |j\rangle|k\rangle \frac{c_{j+k}}{c_j \, c_k} g_j h_k \, |j + k\rangle, \qquad (56)$$

where $r_+$ is the renormalisation factor that occurs from a measurement and will be accounted for later.

This results in a state in which the registers $|j\rangle$ and $|k\rangle$ are entangled with $|j + k\rangle$. However, this entanglement should be undone in order to be able to discard those registers. Therefore, a layer of Hadamard gates is applied to all qubits within $|j\rangle$ and $|k\rangle$ followed by projective measurements onto $|0\rangle$. This defines an operator D that acts as

$$\hat{D} : \frac{1}{r_+} |0\rangle \sum_{j,k} |j\rangle|k\rangle \frac{c_{j+k}}{c_j \, c_k} g_j h_k \, |j + k\rangle \to \frac{1}{\tilde{r}_+} |0\rangle|0\rangle \sum_{j,k} \frac{c_{j+k}}{c_j \, c_k} g_j h_k \, |j + k\rangle, \qquad (57)$$

which is our desired state other than the renormalisation factor $\tilde{r}_+$. The normalisation factor $\tilde{r}_+$ can be calculated as the square root of the probability of the projective measurements for $|0\rangle$ succeeding. This leads to a definition for $\hat{U}_{\text{ADD}}$:

$$\hat{U}_+ = \tilde{r}_+ \, \hat{D} \, \hat{C} \, \hat{U}_{\text{ADD}} \qquad (58)$$

The other part $\hat{U}_-$ is prepared in similar way. As a foundation, the subtractor circuit $\hat{U}_{\text{SUB}}$ is used:

$$\hat{U}_{\text{SUB}} : |g\rangle|h\rangle|0\rangle \to \sum_{j,k}|j\rangle|k\rangle g_j h_k \, |j - k \bmod 2N\rangle. \qquad (59)$$

An additional operator $\hat{U}_{\text{MOD}}$ is now needed: the aim is to prepare $||j{-}k|\rangle$, but the subtractor circuit prepares $|j - k \bmod 2N\rangle$. Therefore when $j - k < 0$, the result needs to be mapped from $|j - k \bmod 2N\rangle = |2N + j - k)$ to $|k - j\rangle$. Because $|j - k| < N$, the cases of $j - k < 0$ and $j - k \geq 0$ are separated by the value of the most significant bit in the result register (when using $n + 1$ qubits and where $N = 2^n$): the state of the most significant qubit is $|1\rangle$ if $j - k < 0$, and $|0\rangle$ otherwise. Thus, a layer of CNOTs controlled by the most significant qubit is applied to the (other qubits of the) result register, such that $|2N + j - k\rangle \to |k - j - 1\rangle$. Then controlled again by the most significant qubit, $|1\rangle$ is added to the result register (using an implementation of the adder circuit) to obtain $|k - j\rangle$. Thus,

$$\hat{U}_{\text{MOD}} : \sum_{j,k}|j\rangle|k\rangle g_j h_k \, |j - k \bmod 2N\rangle \to \sum_{j,k}|j\rangle|k\rangle g_j h_k \, ||j - k|\rangle \qquad (60)$$

Again, shifting to account for the differing coefficient of $T_0$ is required. The same operator $\hat{C}$ described above for the adder circuit can be used. Also similar to the addition case, the other registers need to be disentangled from the results register with Hadamards and projective measurements. The projective measurement results in a renormalisation factor $r_-$, which can be calculated by a probability of success of a projective measurement. This operator $\tilde{D}$ slightly differs from $\hat{D}$ defined for the adder circuit in that it must also apply to the most significant qubit of the results register. This results in an extra scale factor of 2. Together, this yields:

$$\tilde{D}\hat{C} : \sum_{j,k} |j\rangle|k\rangle g_j h_k \, ||j - k|\rangle \rightarrow \frac{1}{\tilde{r}_-} |0\rangle|0\rangle \sum_{j,k} \frac{c_{|j-k|}}{c_j \, c_k} g_j h_k \, ||j - k|\rangle \tag{61}$$

and hence:

$$\hat{u}_- = \frac{\tilde{r}_-}{2} \, \tilde{D} \, \hat{C} \, \hat{u}_{\mathrm{MOD}} \, \hat{u}_{\mathrm{SUB}}. \tag{62}$$

The entire multiplier operator can be pulled together as:

$$\hat{M} = \frac{1}{\sqrt{N}} \left( \hat{u}_+ + \hat{u}_- \right) \tag{63}$$

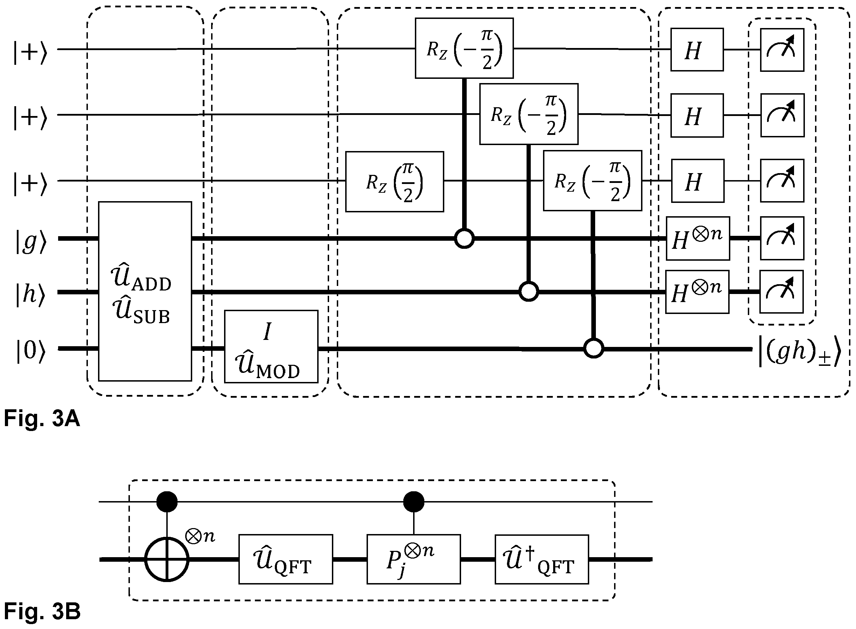

**Fig. 3A** shows circuit diagrams for an adder circuit $\hat{u}_+$ and a subtractor circuit $\hat{u}_-$ and

**Fig. 3B** shows a circuit diagram for a modulo circuit $\hat{u}_{\mathrm{MOD}}$. In particular, **Fig. 3A** shows circuit diagrams of $\hat{u}_+$ and $\hat{u}_-$, which together implement the multiplier operator $\hat{M}$ for the Chebyshev encoding. First either $\hat{u}_{\mathrm{ADD}}$ or $\hat{u}_{\mathrm{SUB}}$ are applied, followed by identity I or $\hat{u}_{\mathrm{MOD}}$, respectively. Details of $\hat{u}_{\mathrm{MOD}}$ are shown in **Fig. 3B.** Then, a block C of rotations to alter the coefficients is applied. Finally, Hadamard gates on all ancillary qubits are applied before a projective measurement onto $|0\rangle$. The probability of success of the projective measurement is used to calculate the renormalisation factors $\tilde{r}_{\pm}$.

**Fig. 3B** shows a circuit diagram of $\hat{u}_{\mathrm{MOD}}$. First, a layer of CNOTs are applied controlled by the most significant (qu)bit. Then via the quantum Fourier transform implementation of the adder circuit, the most significant (qu)bit is added to the remainder of the register. The phase gate $P_j$ denotes diag ( $\left[1, \exp\left(\frac{2\pi i}{2^j}\right)\right]^{`}$ ) where $j$ is a qubit number.

Another popular basis for regression and fitting tasks is the Fourier basis. This basis is formed of the functions $T_j^N(x) = \exp(i\,2\pi j\,x/N)$ where $N = 2^n$ is the number of available basis states and $n$ is the number of qubits. A feature map is formed of a layer of Hadamards on each qubit followed by a layer of phase gates $P_n(x,j) = \mathrm{diag}(1, \exp(i\,\pi\,x\,2^{j-n}))$ where $j$ is the qubit number being acted upon. This prepares a state

$$|x\rangle = \frac{1}{\sqrt{N}} \sum_{j=0}^{N-1} T_j^N(x)|j\rangle. \tag{64}$$

When taking derivatives, it follows that

$$P_n'(x,j) = \mathrm{diag}\left(0, i\,\pi\,2^{j-n}\right) P_n(x,j) = G_j \, P_n(x,j) \tag{65}$$

$$G_j = i\,\pi\,2^{j-n-1} I - i\,\pi\,2^{j-n-1} Z \tag{66}$$

As there are multiple gates, the product rule is utilised for $G = \Sigma_j \, G_j$, the full derivative operator.

At the set of points $\{j\}_{j=0}^{N-1}$, the Fourier map prepares an orthonormal basis. The transform operator which maps between this basis and the computational basis is the Quantum Fourier Transform (QFT), which is well-known in the art.

When considering a multiplication operator again the first step is to consider the multiplication rules of the basis functions and the resulting product basis:

$$T_j^N(x)T_k^N(x) = T_{j+k}^N(x), \tag{67}$$

$$|xx\rangle = \frac{1}{\sqrt{2N}}\Sigma_{j=0}^{2N-1} T_j^N(x). \tag{68}$$

The form of $|xx\rangle$ is similar to $|x\rangle$, and therefore the same encoding circuit can be used extended to $n+1$ qubits by acting on an additional qubit with $P_{n+1}(x,n+1)$. This yields the desired $|gh\rangle$ and operator $\hat{M}$:

$$|gh\rangle_l = \frac{1}{\sqrt{N/2}} \sum_{j=\max(0,l-N+1)}^{\min(l,N-1)} |g\rangle_j \, |h\rangle_{l-j}, \tag{69}$$

$$\hat{M} : \; |g\rangle|h\rangle|0\rangle \rightarrow \frac{1}{\sqrt{N/2}}|a\rangle \sum_{j,k} g_j \, h_k \, |j+k\rangle. \tag{70}$$

Comparing to the Chebyshev encoding case (54) we see that the Fourier multiplicator is a simplification of this:

$$\hat{M} = \frac{1}{\sqrt{N/2}}\tilde{r} + \hat{D}\,\hat{U}_{\mathrm{ADD}}. \tag{71}$$

With this, the necessary building blocks for implementing training with Fourier encoding have been introduced.

Comparing Chebyshev encoding versus Fourier encoding we note their most notable differences. The first is that as the Chebyshev encoding state is real for all x that a real only function can easily be enforced by using a variational ansatz which only prepares states with real amplitudes. As many problems considered are real only this can be a useful restriction to be able to enforce. The Fourier encoding state is naturally complex therefore such a simple enforcement for real only functions isn't available - possibly a specific variational ansatz could be created for this purpose but it is not currently known. The next point of comparison is the basis functions themselves. Fourier encoding basis functions are periodic in nature and are particularly suited to problems of a trigonometric nature. Chebyshev encoding basis functions are real polynomials. For each problem an appropriate basis (one of these two or another entirely) would have to be found. Finally we observe that in general the implementation of the operators for the implementation of the Fourier encoding are simpler than the Chebyshev encoding.

With two specific encodings considered we now reconsider the general case. For any encoding chosen the appropriate operators must be found. Generally their implementation will vary greatly based on the encoding. The multiplier in particular will vary. However we believe that many encodings of interest will have multipliers that are able to be implemented with modifications of the adder and subtractor circuits.

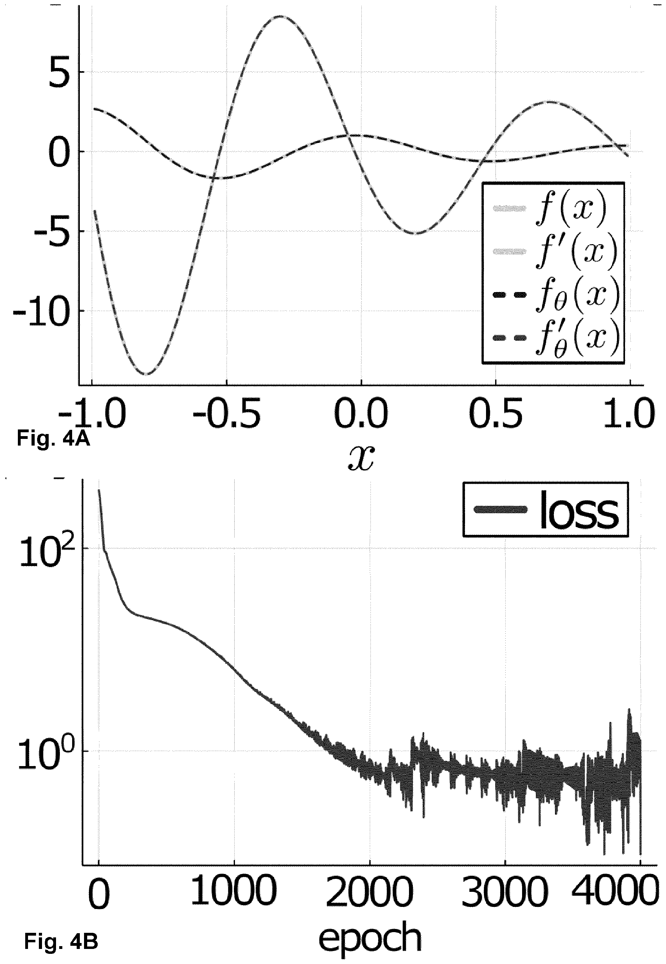

**Fig. 4A** and **4B** show results of a solution of a linear differential equation obtained with a method according to an embodiment. The linear differential equation is $\frac{df(x)}{dx} + \exp(-kx)\,(k\cos(\lambda x) + \lambda\sin(\lambda x)) = 0$ with $k=1$ and $\lambda = 2\pi$. In particular, **Fig. 4A** shows a plot of a target function and derivative (solid lines) versus resulting function and derivative (dashed lines). **Fig. 4A** shows a value of a loss function over epoch iteration.

As an example, a simple linear differential equation is considered:

$$\frac{df(x)}{dx} + \exp(-\kappa x)\,(\kappa\cos(\lambda x) + \lambda\sin(\lambda x)) = 0, \; f(0) = 1. \tag{72}$$

This differential equation has a known analytic solution

$$f(x) = \exp(-\kappa x)\cos(\lambda x), \tag{73}$$

which is a damped oscillator. The algorithm is simulated using the programming language Julia and the package Yao.jl which enables full state simulation. The Chebyshev encoding for four qubits is used. The derivative operator, multiplier and transform follow from this as detailed earlier. A variational Ansatz formed of alternating layers of Ry rotations and CNOTs is used with seven rational and six entanglement layers. This Ansatz prepares states with real amplitudes only, leading to a trial function that is necessarily real.

The differential equation is formed of two primitive elements. The representation of the primitive element df(x)/dx is given by $|df/dx\rangle\rangle = G^\dagger \hat{U}_\theta |0\rangle$. The representation of the primitive element g(x) = exp(-kx) (x cos(Ax) + $\lambda$sin($\lambda x$)) is recovered from use of the transform as described in the previous section and is given by |g(x)) = $\theta_s$ |g). Hence, the full differential equation is represented by

$$|DE\rangle\rangle = G^\dagger \hat{U}_\theta |0\rangle + \theta_s |g\rangle \tag{74}$$

The corresponding loss function for this differential equation is then:

$$\mathcal{L}_{DE}(\theta) = \langle\langle DE|DE\rangle\rangle = \langle 0|\hat{U}_\theta^\dagger G\, G^\dagger \hat{U}_\theta|0\rangle + \theta_s \langle g|G^\dagger \hat{U}_\theta|0\rangle + \theta_s \langle 0|\hat{U}_\theta^\dagger G|g\rangle + \theta_s^2 \langle g|g\rangle. \tag{75}$$

The initial value component is

$$\mathcal{L}_{\mathrm{init}}(\theta) = (f_\theta(0) - 1)^2. \tag{76}$$

In this example, the total loss function is taken as

$$\mathcal{L}(\theta) = \sqrt{\mathcal{L}_{DE}} + 10\,\mathcal{L}_{\mathrm{init}}. \tag{77}$$

As the square root is monotonic increasing over R+, this acts as a rescale which affects training behaviour and the emphasis of training for the DE vs. the initial value. The pre-factor of 10 for $\mathcal{L}_{\mathrm{init}}$ is included for the same reason. This loss is minimised via the Adam optimiser with learn rate 0.005. The results are shown in **Fig. 4.**

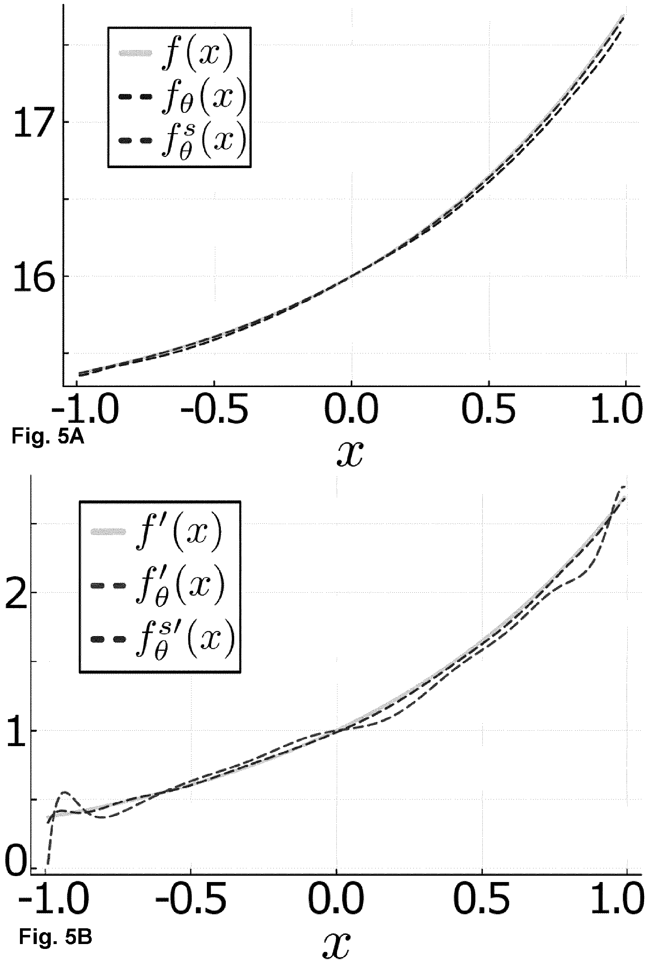

**Fig. 5A-5D** show results of a solution of a linear differential equation obtained with a method according to an embodiment.

Most examples in this disclosure use a trial function of the form defined in eq. (21), focusing on the effect of the choices for the set of basis functions, i.e., the encoding for |x), (affecting the range of functions it is able to represent) as well as the trainability (the ease of training the model to find a particular function). In addition, alterations can be made to $|f_\theta\rangle\rangle$ which also affect expressibility and trainability - provided that every term of the trial function can be expressed with the *x* encoding the same and separable. As an example of this, the trial functions of the following form are considered:

$$f_\theta(x) = \theta_s\langle x|f_\theta\rangle = \langle x|\theta_s\hat{U}_\theta|0\rangle, \tag{78}$$

$$f_\theta^s(x) = \theta_s\langle x|f_\theta\rangle + \theta_{sh} = \langle x|\big(\theta_s\hat{U}_\theta|0\rangle + \theta_{sh}|\psi_1\rangle\big), \tag{79}$$

where $|\psi_1\rangle$ is the state representing the function g(x) = 1. For the second representation to be valid g(x) = 1 must be able to be exactly expressible by the choice of encoding, approximations can be used but this then must be taken into account for derivatives etc. For both the Fourier and the Chebyshev encoding, the zeroth-order basis function is a constant, such that this requirement can be met.

The motivation for this trial function is to improve trainability when the solution value range is significantly smaller than the magnitude of the solution. For the original trial function for solutions with large magnitude $\theta_s$ will necessarily be large and therefore training of $|f_\theta\rangle$ must be very precise to capture the solution. With the shift included in the trial function instead, $\theta_{sh}$ is large to capture the magnitude of the solution and $\theta_s$ can remain smaller, leading to easier capturing of solution shape.

This is shown in **Fig. 5A** and **5B,** showing the results of a simulation for the solution of the differential equation

$$\frac{df}{dx} - f + 15 = 0, \; f(0) = 16, \tag{80}$$

with both trial functions (78) and (79). This problem has an analytic solution $f(x) = \exp x + 15$. Chebyshev encoding is used over four qubits and the real-only Ansatz of depth six as used in previous results. With the Chebyshev encoding $g(x) = 1$ is an accessible basis function, therefore the appropriate state representation $\psi_1$ can be found by inspecting basis functions or using the transform.

For this differential equation, there are three differential equation terms:

1) d$f$/dx is represented by $\quad |DE_1\rangle = \theta_s G^\dagger \hat{U}_\theta |0\rangle$ .

2) $f$ is represented by $|DE_2\rangle = \theta_s \hat{U}_\theta |0\rangle$ for trial function (21) and $|DE_2\rangle = \theta_s \hat{U}_\theta |0\rangle + \theta_{sh} |\psi_1\rangle$ for trial function (79).

3) $g(x) = 15$ is represented by $|DE_3\rangle = 15\,|\psi_1\rangle$.

The corresponding differential equation loss term is from substituting in these expressions to (7). We also receive the corresponding initial value loss as $\mathcal{L}_{\text{init}}(\theta) = (f_\theta(0)\text{- }16)^2$.

Similar to the linear case scaling is applied to the terms when forming the full loss for

$$\mathcal{L}(\theta) = \sqrt{\mathcal{L}_{DE}} + 10\,\mathcal{L}_{\text{init}}. \qquad (81)$$

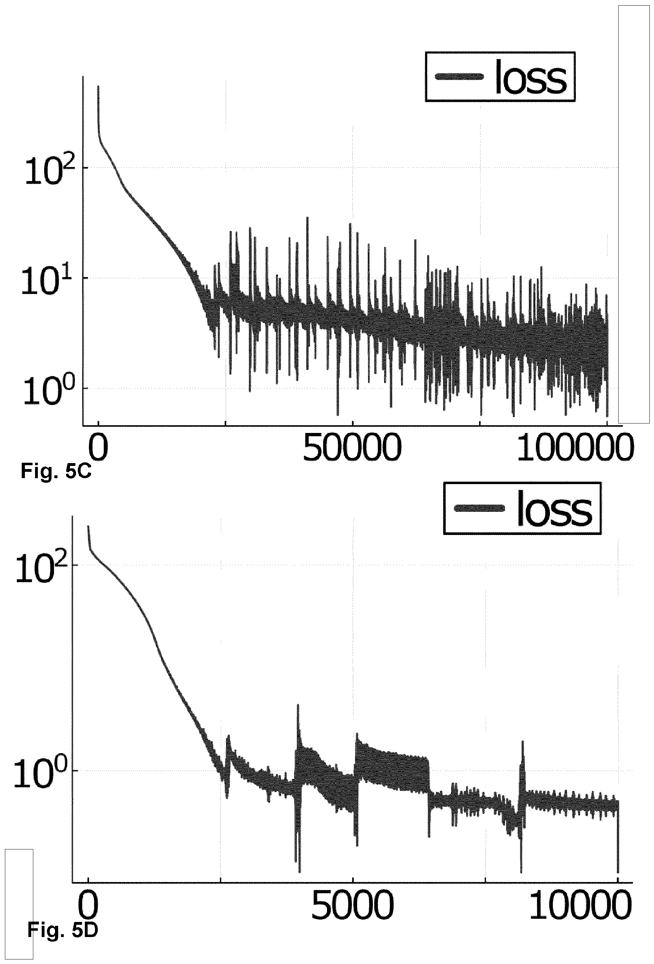

This loss is minimised via the Adam optimiser with learn rate 0.005 for both trial functions. Results are shown in **Fig. 5C** and **5D**. The shifted case is both able to achieve a better fit but also in much fewer epochs (10,000 compared to 100,000). This exhibits the improved trainability for the trial function including shift term for this problem.

**Fig. 5A-5D** show results of solving a linear differential equation obtained with a method according to an

$$\frac{\mathrm{d}f}{\mathrm{d}x} - f + 15 = 0$$

embodiment. The linear differential equation is with initial value of $f(0) = 16$ with two different trial functions (78) and (79). **Fig. 5A** shows a plot of target function (solid line) versus solution from training with the two different trial functions (dash lines). **Fig. 5B** shows a plot of target function derivative (solid line) versus solution derivative from training with the two different trial functions (dash lines). **Fig. 5C** and **5D** shows a value of a loss function over epoch iteration from training with trial function (78) and (79) respectively.

**Fig. 5A** and **5B** show results of a solution of a non-linear differential equation obtained with a method according to an embodiment. The results are shown for non-linear differential equation:

$$\frac{\mathrm{d}f(x)}{\mathrm{d}x} + f^2 = 0, \; f(0) = 0.5. \qquad (82)$$

This differential equation has a known analytic solution:

$$f(x) = 1/(2 - x). \qquad (83)$$

The simulation is programmed in the same way as in the linear case. A Chebyshev encoding of three qubits is used and again the derivative operator, multiplier and transform follow from this. The same variational Ansatz is used as in the linear case.

The two terms (primitive elements) of this differential equation are d$f$/dx and $f^2$. They are both prepared using the multiplication operator $\widehat{\mathcal{M}}$ such that the terms have the same $x$ encoding. The first term is prepared by multiplying $g(x) = 1$ and d$f$/dx for $|DE_1\rangle = \theta_s \widehat{\mathcal{M}} |g\rangle G^\dagger \hat{U}_\theta |0\rangle$. As 1 is a natural occurring basis function of the Chebyshev encoding $(T_0(x) = 1)$, the relevant $|g\rangle$ can easily be found as $2^{n/2}[1,0,0,...]$. The second term, $f^2$, is prepared as $|DE_2\rangle\rangle = \theta_s^2 \widehat{\mathcal{M}} \hat{U}_\theta |0\rangle \hat{U}_\theta |0\rangle$. The corresponding differential equation loss term is obtained by substituting these expressions in eq. (15). The corresponding initial value loss is chosen as $\mathcal{L}_{\text{init}}(\theta) = (f_\theta(0) - 0.5)^2$.

Similar to the linear case, scaling is applied to the terms when forming the full loss function:

$$\mathcal{L}(\theta) = \sqrt{\mathcal{L}_{DE}} + 10\,\mathcal{L}_{\text{init}}. \qquad\qquad (84)$$

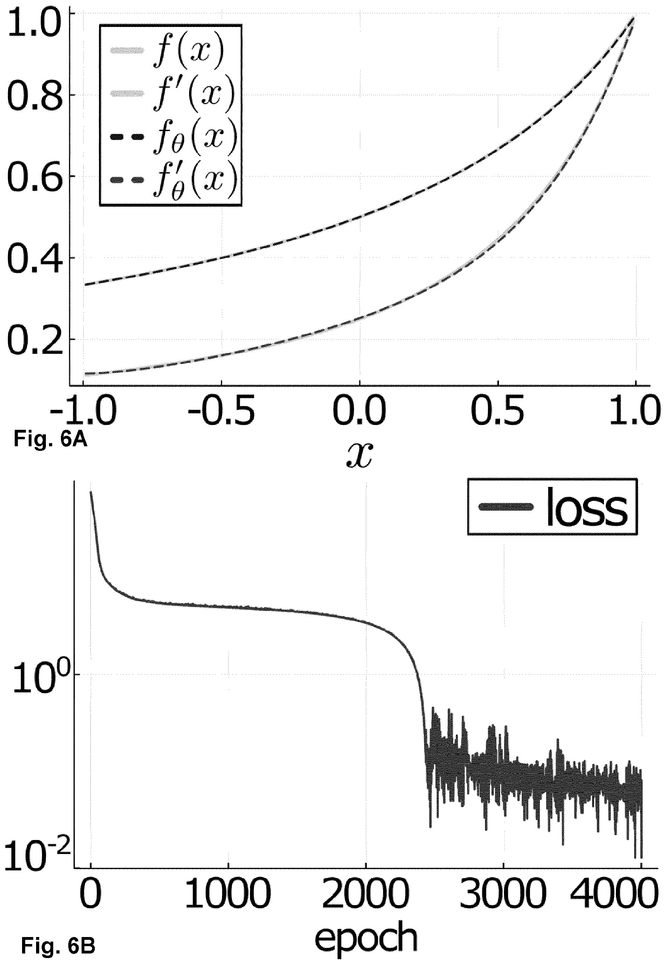

This loss is minimised via the Adam optimiser with learn rate 0.005. Good results are achieved and shown in **Fig. 6A** and **6B**.

**Fig. 6A** shows results of solving non-linear differential $df/dx - f^2 = 0$. (a) Plot of target function and derivative (solid lines) versus resulting function and derivative (dash lines). **Fig. 6A** shows a value of loss function over epoch iteration.

**Fig. 7A** and **7B** show results of a solution of a multidimensional differential equation obtained with a method according to an embodiment.

We now simulate the solving of a two dimensional differential equation

$$\frac{\mathrm{d}f(x,y)}{\mathrm{d}y} - 2y - x = 0, \qquad f(x,0) = 1.$$

This differential equation has an analytic solution $f(x, y) = y^2 + xy + 1$. For this problem, the two independent variables are encoded in parallel registers for a trial function:

$$f_\theta(x, y) = \theta_s \langle x | \langle y | f_\theta \rangle.$$

Both $|x\rangle$ and $|y\rangle$ are encoded with Chebyshev encoding of two qubits. $|f_\theta\rangle$ is prepared with the same real-only Ansatz used for previous results over four qubits with depth six.

The two terms of the differential equation are df/dy and $g(x,y) = -2y - x$. The first term is a derivative. Because the variables are encoded in separate registers, in order to calculate the derivative, the derivative operator $G^\dagger$ is applied to the register of the variable being differentiated while the remaining register is left untouched. Therefore, the corresponding state is

$$|DE_1\rangle\rangle = \left(I \otimes G^\dagger\right)\hat{U}_\theta |0\rangle.$$

For the second term, the representative state is prepared by applying $\hat{U}_{\text{QCT}}^\dagger \otimes \hat{U}_{\text{QCT}}^\dagger$ to the state prepared with amplitudes equal to $g(x,y)$ evaluated at $\{x_j\}_j \otimes \{x_j\}_j$, where $\{x_j\}_j$ are the Chebyshev nodes for $|DE_2\rangle\rangle$.

The differential term of the loss function is then found by substituting these expressions into (7). The loss corresponding to the boundary condition is found as $\mathcal{L}_{\text{BC}}(\theta) = \Sigma_j(f_\theta(x_j,0) - 1)^2$ where $\{x_j\}$ are a set of boundary evaluation points. In this example, 21 uniformly spaced points between -1 and 1 were used.

Again the total loss

$$\mathcal{L}(\theta) = \sqrt{\mathcal{L}_{DE}} + 10\,\mathcal{L}_{\text{BC}}.$$

is used. This loss is minimised via the Adam optimiser with learn rate 0.005. Good results are achieved and shown in Fig. 6.

FIG. 6. Results of solving multidimensional DE $\frac{\mathrm{d}f(x,y)}{\mathrm{d}y} - 2y - x = 0$ with boundary condition $f(x,0) = 1$. (a) Result from training shown as contour plot of $f_\theta(x,y)$ versus $x$ and y. (b) Loss values from training as a function of epoch number.

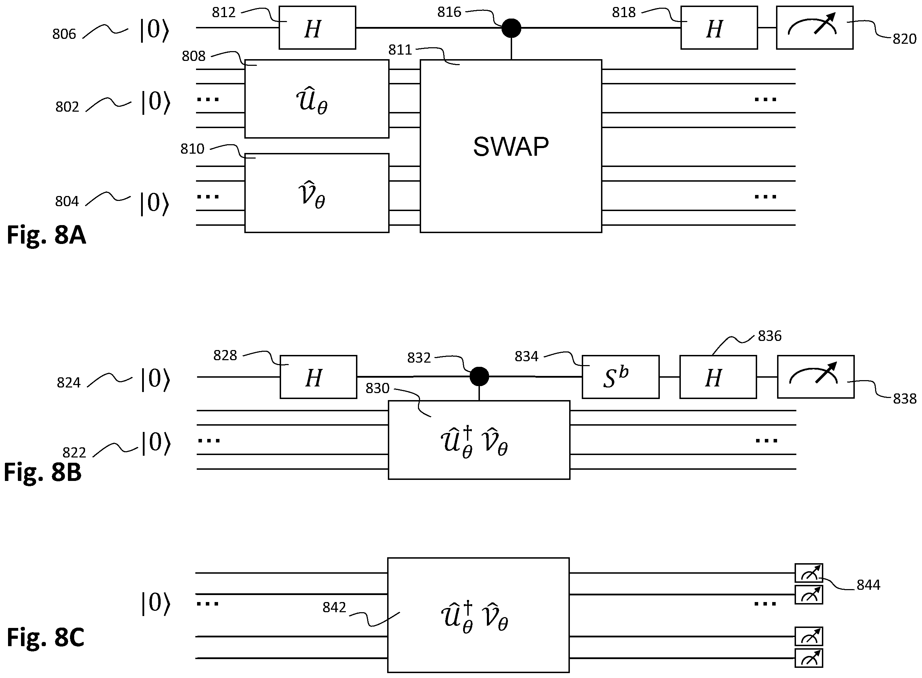

**Fig. 8A-H** depict circuit diagrams for evaluating an overlap, respectively a derivative thereof, according to various embodiments. Other embodiments may use different circuits to measure the overlap of two wave functions. In particular, **Fig. 8A** shows a circuit diagram for implementation of a squared overlap of the general form

$$|\langle\psi_j|\psi_k\rangle|^2 = \langle 0|\hat{U}^\dagger \hat{V}|0\rangle\langle 0|\hat{U}\hat{V}^\dagger|0\rangle. \qquad\qquad (85)$$

In this example, a so-called SWAP-test (as defined in H. Buhrman et al. "Quantum fingerprinting", Physical Review Letters 87:16 (2001), page 167902, which is hereby incorporated by reference) is used to measure the expectation value $|\langle\psi_j|\psi_k\rangle|^2$ of an overlap of two wave functions $|\psi_j\rangle$ and $|\psi_k\rangle$ directly. The wave functions $|\psi_j\rangle$ and $|\psi_k\rangle$ typically

correspond to the primitive elements of the individual terms of the differential equation; i.e., the wave functions $\left|de_\theta^{k,m}\right\rangle$ and $\left|de_\theta^{l,n}\right\rangle$, as defined in eq. (16). The swap test may be performed by having two parallel registers of $n$ qubits, one for a first wave function $|\psi_j\rangle$ **802** and one for a second wave function $|\psi_k\rangle$ **804,** plus a single ancillary qubit **806.** Thus, the swap test requires $2n + 1$ qubits where $n$ is the number of qubits used to express $|\psi_j\rangle$.

A unitary operator $\hat{\mathcal{U}}$ is applied to the registers for $|\psi_j\rangle$ and $|\psi_k\rangle$, respectively, in order to obtain $|\psi_j\rangle = \hat{\mathcal{U}}|0\rangle$ **808** and $|\psi_k\rangle = \hat{\mathcal{V}}|0\rangle$ **810**. A Hadamard gate $H$ **812** is applied to the ancillary qubit, and then a controlled-SWAP operation **814** is performed between all qubits of the other registers, conditioned on the ancilla qubit with a control operation **816.** The controlled swap onto the size $2n$ register is made up of controlled swap on the $i^{th}$ qubit of each of the two size $n$ registers, for $i \in 1: n$. Subsequently, another Hadamard gate **818** is applied to the ancillary qubit and the qubit is then measured in the Z basis **820** to read the squared overlap value $|\langle\psi_j|\psi_k\rangle|^2$.

If $\psi_j$ and $\psi_k$ are equal, the SWAP operation will not do anything, and hence the two Hadamard gates will combine to an $X$ gate and the measurement results always exactly 1. If $\psi_j$ and $\psi_k$ are different, the controlled-SWAP gate will incur a phase-kickback on the ancillary qubit, which is detected as an average value of the measurement between 0 and 1. This way, the squared overlap can be estimated using this circuit, which is physically implementable even on current-generation qubit-based quantum computers.

**Fig. 8B** shows a circuit diagram for an alternative implementation of an overlap measurement. This circuit may be used to determine an overlap

$$\langle\psi_j|\psi_k\rangle = \langle 0|\hat{\mathcal{U}}^\dagger\,\hat{\mathcal{V}}|0\rangle \qquad (86)$$

(or functions thereof). Using this circuit, the real and imaginary parts of the overlap $\langle\psi_j|\psi_k\rangle$ may be measured by means of a so-called 'Hadamard-test'. In this case, both x and y are mapped to one register of $n$ qubits **822.** A single ancillary qubit **824** may be used for measurements. Thus, the swap test requires $n + 1$ qubits where $n$ is the number of qubits used to express $|\psi_j\rangle$.

First a Hadamard gate **828** is applied to the ancillary qubit. Then, an (undaggered) unitary operator $\hat{\mathcal{V}}$ is applied to the register to create a quantum state $|\psi_k\rangle = \hat{\mathcal{V}}|0\rangle$, followed by a daggered unitary operator $\hat{\mathcal{U}}^\dagger$, in order to obtain a quantum state $|\psi_{j,k}\rangle = \hat{\mathcal{U}}^\dagger\,\hat{\mathcal{V}}|0\rangle$ **830**. The application of the unitary operators is controlled by the ancillary qubit **832.** This circuit employs the identity

$$\langle\psi_j|\psi_k\rangle = \langle 0|\hat{\mathcal{U}}^\dagger\,\hat{\mathcal{V}}|0\rangle = \langle 0|\psi_{j,k}\rangle \qquad (87)$$

An S-gate $S^b = \exp(-i\, b\, \pi\, Z/4)$ is then applied **834** to the ancillary qubit, where Z is the Pauli-Z operator. It is noted that if $b = 0$, this gate does nothing. This is followed by an Hadamard gate **836** and then a measurement operation **838.** Steps **834-838** may be applied twice, once with $b = 0$ to measure the real part of the overlap $\mathrm{Re}(\langle\psi_j|\psi_k\rangle)$ and once with $b = 1$ to measure the imaginary part of the overlap $\mathrm{Im}(\langle\psi_j|\psi_k\rangle)$, but in many applications, only either the real or imaginary part is needed, so that a single application suffices.

Based on these measurements, various overlap-related functions may be constructed (typically using a classical computer), e.g.

$$\langle\psi_j|\psi_k\rangle = \mathrm{Re}\big(\langle\psi_j|\psi_k\rangle\big) + \mathrm{Im}\big(\langle\psi_j|\psi_k\rangle\big) \qquad (88)$$

or

$$\big|\langle\psi_j|\psi_k\rangle\big|^2 = \mathrm{Re}\big(\langle\psi_j|\psi_k\rangle\big)^2 + \mathrm{Im}\big(\langle\psi_j|\psi_k\rangle\big)^2. \qquad (89)$$

**Fig. 8C** shows a quantum circuit diagram for an alternative implementation of an overlap measurement. The quantum circuit is similar to **Fig. 8B,** but instead of the controlled-unitary **830,** a control-free version **842** of the (same) unitary is used. Finally, all $n$ qubits are measured (rather than only the ancillary qubit), and the number of times a zero is observed divided by the total number of measurements is an estimate of the squared overlap value $|\langle\psi_j|\psi_k\rangle|^2$.

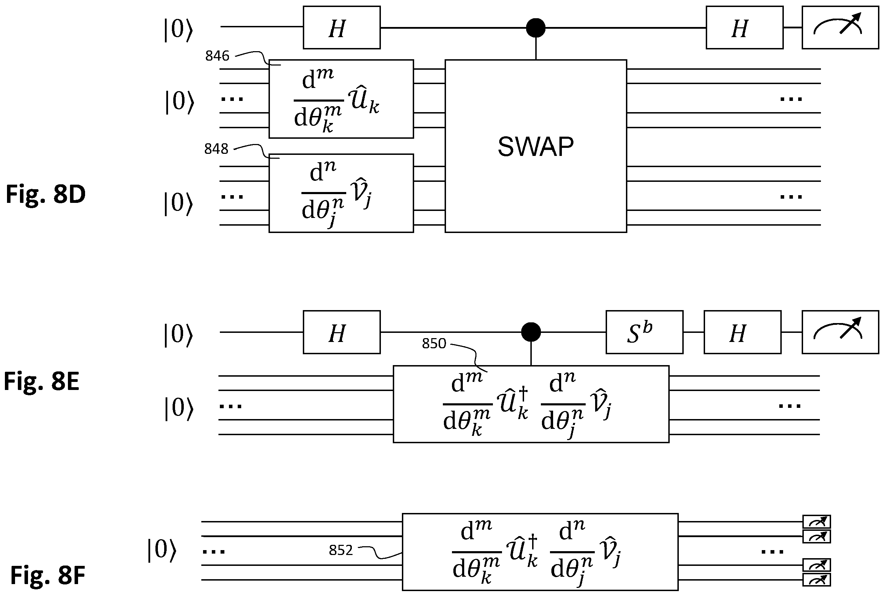

**Fig. 8D** shows a quantum circuit that implements overlaps of arbitrary-order derivatives of an encoding as an overlap measurement by means of a so-called 'SWAP-test', while **Fig. 8E** shows a quantum circuit that implements overlaps of arbitrary-order derivatives of the encoding as overlap measurement by means of a so-called 'Hadamard-test', and **Fig. 8F** shows a quantum circuit that implements overlaps of arbitrary-order derivatives of the encoding as overlap measurement by means of evaluating the expectation value of the $|0\rangle\langle0|$ operator. As was mentioned earlier, solving differential equations using the described methods requires evaluating derivatives of an encoding. Computing the derivative with respect to the parameters may be useful in various optimisation schemes, such as gradient-descent (or ascent) based optimisation.

The circuit structure in **Fig. 8D** is same as in **Fig. 8A,** except for the unitary operators used to create the quantum state: in this case derivatives **846,848** of the unitary operators **808,810** are used.

The circuit structure in **Fig. 8E** is same as in **Fig. 8B,** except for the unitary operators used to create the quantum state. Instead of encoding a quantum state $\left|\psi_{j,k}\right\rangle = \hat{\mathcal{U}}^{\dagger}\,\hat{\mathcal{V}}\,|0\rangle$ $|0\rangle$, derivatives of the parameterized unitary operator $\hat{\mathcal{U}}(\theta)$ with respect to the one or more parameters $\theta$ are used in the controlled-unitary operation **850** (replacing controlled-unitary operation **830**) in order to measure the real and imaginary parts of the overlap

$$\left\langle 0 \left| \frac{\mathrm{d}^m}{\mathrm{d}\theta_k^m}\,\hat{\mathcal{U}}_k^{\dagger}\,\frac{\mathrm{d}^n}{\mathrm{d}\theta_j^n}\,\hat{\mathcal{V}}_j \right| 0 \right\rangle. \tag{90}$$

Here, $k$ and $j$ are indices denoting the gates that are being differentiated with respect to the $\theta_k$ and $\theta_j$ parameters, respectively; by summing *over j* and *k,* the full overlap $\left\langle 0 \left| \frac{\mathrm{d}^m}{\mathrm{d}\theta_k^m}\,\hat{\mathcal{U}}_k^{\dagger}\,\frac{\mathrm{d}^n}{\mathrm{d}\theta_j^n}\,\hat{\mathcal{V}}_j \right| 0 \right\rangle$ can be evaluated. In principle, any order of derivative $n$ or m, with respect to $\theta_k$ or $\theta_j$ respectively, can be considered, in any dimension for either; however, in practice, only the first or sometimes second derivative is needed.

The circuit structure in **Fig. 8F** is same as in **Fig. 8C,** except for the unitary operators used to create the quantum state, which involves (again) a derivative **852** of the unitary operator **842** used in **Fig. 8C.**

In this example, $\mathcal{U}(x)$ is assumed to be of the form $\mathcal{U}(x) = V_0\,\mathcal{U}_{\phi_1}(x)\,V_1\,...\,\mathcal{U}_{\phi_M}(x)\,V_M$ with each $\mathcal{U}_{\phi_j}(x) = \exp\left(-i\,\mathcal{G}_j\,\phi_j(x)\right)$. For this case, $\mathcal{U}'(x) = \sum_{j=1}^{M}\mathcal{U}_{0:j-1}\mathcal{U}_{\phi_j}\left(-i\,\mathcal{G}_j\,\phi'_j(x)\right)\mathcal{U}_{j+1:N}$ with $\mathcal{U}_{j:k} = V_j\,\mathcal{U}_{\phi_1}(x)\,V_{j+1}\,...\,\mathcal{U}_{\phi_k}(x)\,V_k$, where a prime denotes a first-order derivative with respect to x. It can be assumed that the $\mathcal{G}_j$ are unitary-if they were not, they could be decomposed into sums of unitary terms and the relevant Hadamard tests could be calculated for each term in the sum. When $\mathcal{G}_j$ is indeed unitary, it can be implemented as a quantum circuit, so each term in the derivative expansion can then be calculated with two Hadamard tests.

Similar computations can be used to evaluate other derivatives, such as higher-order derivatives, derivatives d/dy with respect to y, etc. In general, using the product rule on eq. (85) or (86), any derivative can be expressed as sums of products of overlaps with $\mathcal{U}(x)$ and $\mathcal{U}(y)$ differentiated to different orders. These overlaps can be calculated with two (when the generators are unitary) overlap tests for each gate with x respectively y as a parameter. These overlap evaluations can be reused for calculating different derivatives where the same overlap occurs.

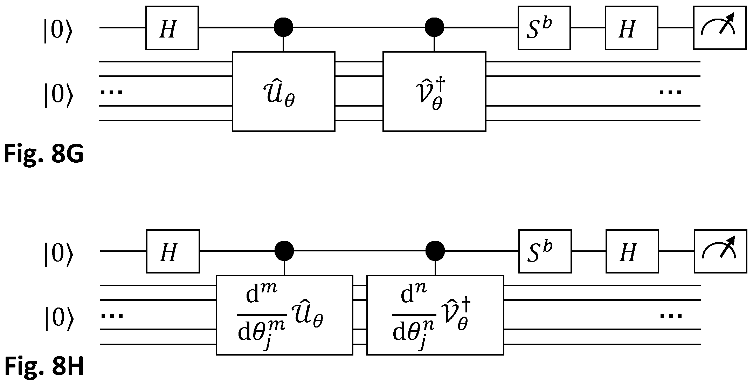

**Fig. 8G** and **8H** are circuit diagrams of Hadamard tests to measure overlaps and derivatives. **Fig. 8G** shows a Hadamard test measuring $\mathrm{Re}\left(\langle 0|\hat{\mathcal{U}}_{\theta}^{\dagger}\,\hat{\mathcal{V}}_{\theta}|0\rangle\right)$ and $\mathrm{Im}\left(\langle 0|\hat{\mathcal{U}}_{\theta}^{\dagger}\,\hat{\mathcal{V}}_{\theta}|0\rangle\right)$ for $b = 0$ and $b = 1$, respectively. $S^b$ denotes the phase gate, exp(-$\pi$ $b$ Z/4).

**Fig. 8H** shows a quantum circuit, wherein a Hadamard test is used for evaluation of the overlap $\frac{\mathrm{d}}{\mathrm{d}\theta_j}\langle 0|\hat{\mathcal{U}}_{\theta}^{\dagger}\,\hat{\mathcal{V}}_{\theta}|0\rangle$, where m and n index over which gates with $\theta_j$ as parameters are differentiated. When $b = 0$ and $b = 1$ are used the real and imaginary part is evaluated, respectively. By summing *over j, k* and $b = 0/1$ the full overlap can be evaluated.

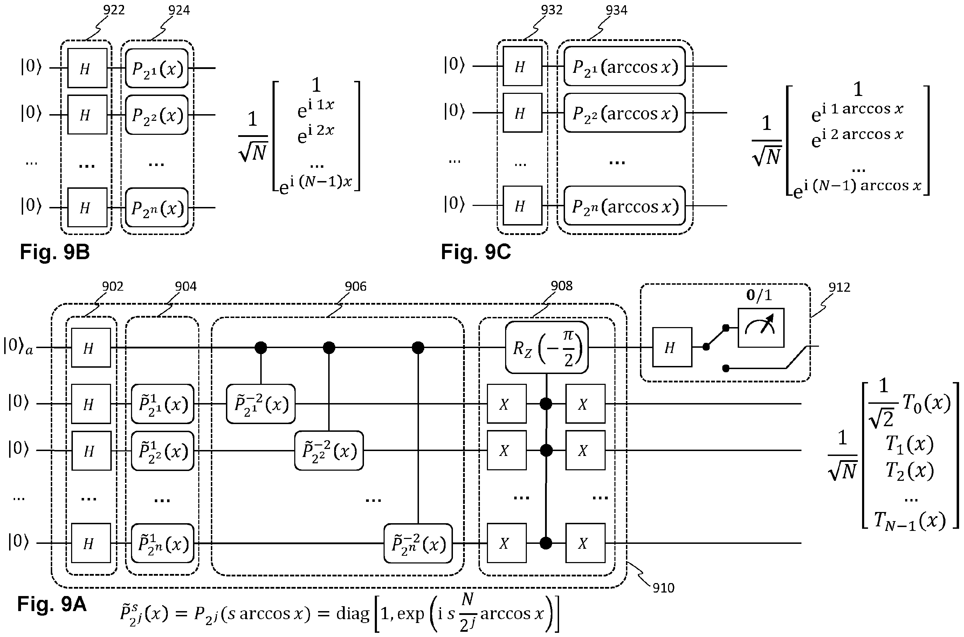

The construction of the circuit shown in **Fig. 9A,** which encodes a data point x with a Chebyshev feature map, is based on the observation that the Chebyshev polynomials are defined as $T_k(x) = \cos(/c \arccos(x))$ and are therefore of the form of cosine; in particular, $$T_k\left(x_j^{\mathrm{Ch}}\right) = \cos\left(k\,\pi\,\left(1 - \frac{j+1/2}{N}\right)\right)$$. The cosine can be recovered from

$\cos(x) = \frac{1}{2}\left(e^{\mathrm{i}\,x} + e^{-\mathrm{i}\,x}\right)$, which can be implemented with the use of an ancillary qubit.

Thus, the Chebyshev polynomials can be prepared using a combination of exponents for some scaled variable x, where each amplitude is embedded via a phase feature map [ref DQGM]. The positive and negative phase can be combined using a so-called Linear Combination of Unitaries (LCU) approach, as described in Childs et al., 'Quantum algorithm for systems of linear equations with exponentially improved dependence on precision', SIAM Journal on Computing 46 (2017) pages 1920-1950.

In this approach, maps are conditioned on the state of the (top) ancilla qubit, and effectively interfered, choosing the ancilla collapsed to 0 outcome.

In a first step **902,** a layer of Hadamard gates is applied to all qubits (including the ancilla) to prepare a superposition of all basis states. In a step **904,** a single-qubit scaled phase shift gate $\tilde{P}_{2^j}^1(x)$ is applied to the encoding qubits, which is defined as

$$\tilde{P}_{2^j}^s(x) = P_{2^j}(s \arccos x) = \mathrm{diag}\left[1, \exp\left(\mathrm{i}\,s\,\frac{N}{2^j}\arccos x\right)\right] \tag{91}$$

where $j$ is the qubit number. This is followed by a layer **906** of controlled single-qubit scaled phase feature maps $\tilde{P}_{2^j}^{-2}(x)$ that are conditioned on the ancilla. Conceptually, the first layer corresponds to exp(i x) and the second layer corresponds to exp(-i 2x). However, since exp(-i x) = exp(i x) exp(-i 2x), this results in equal-weight combinations of exponents exp(i $x$) + exp(-i $x$). Thus, the amplitudes for the basis functions are scaled, based on the variable $x$ such that $T_k(x)$ are recovered.

Finally, the weight of the constant ($T_0(x)$) term is adjusted. The depicted example uses a round of Grover's iterate circuit **908,** rotating the state around $|\emptyset\rangle$ for a fixed angle $-\pi/2$. As the measurement operation **912** on the ancilla (including the preceding Hadamard gate) commutes with rotation, the measurement can be postponed to the end of the circuit. This allows post-selection of the desired state also on systems where only all qubits can be read out simultaneously.

This way, the resulting quantum Chebyshev feature map creates a Chebyshev state via an x-parametrized isometry.

The layers **902-908** may together be referred to as the Chebyshev feature map 910, as in practice the measurement on the ancilla may often be postponed, with one or more other circuits in between. The Chebyshev feature map may be represented by a unitary operator $\hat{U}_\tau(x)$.

This results in a state such that at the set of the $N = 2^n$ Chebyshev nodes an orthonormal basis is formed. Therefore, there exists a bijection and corresponding transformation between this basis and any different orthonormal basis. **Fig. 5A** shows the Chebyshev transform which performs the transformation between the Chebyshev and computational bases.

**Fig. 9B** schematically shows a quantum circuits for a Fourier feature map (Fourier encoding or spectral encoding), for the sake of comparison. This circuit does not use an ancilla. The circuit comprises a layer of Hadamard gates **922** to create a superposition of all basis states, followed by a layer **924** of (unscaled) single-qubit phase feature maps

$$P_{2^j}(x) = \mathrm{diag}\left[1, \exp\left(\mathrm{i}\,\frac{N}{2^j}x\right)\right] \tag{92}$$

**Fig. 9C** schematically shows a quantum circuits for a phase-encoded Chebyshev-like feature map, for the sake of comparison. This circuit does not use an ancilla. The circuit comprises a layer of Hadamard gates **932** to create a superposition of all basis states, followed by a layer **934** of (scaled) single-qubit phase feature maps

$$\tilde{P}^1_{2^j}(x) = P_{2^j}(\arccos x) = \mathrm{diag}\left[1, \exp\left(\mathrm{i}\,\frac{N}{2^j}\arccos x\right)\right] \qquad (93)$$

For the sake of clarity, it is noted that the feature maps referred to as Chebyshev encoding feature maps in previous disclosures by the present inventors are fundamentally different from the Chebyshev feature map described herein. For example, the previously described feature maps have, in general, a non-zero imaginary part, and are not orthonormal. This prevents their conversion to amplitude encoding (which is standard in quantum information processing), and building distributions for generative modelling in particular. By contrast, the currently disclosed Chebyshev feature map is orthonormal and real (i.e., the imaginary part is zero), and may therefore be considered an amplitude encoding.

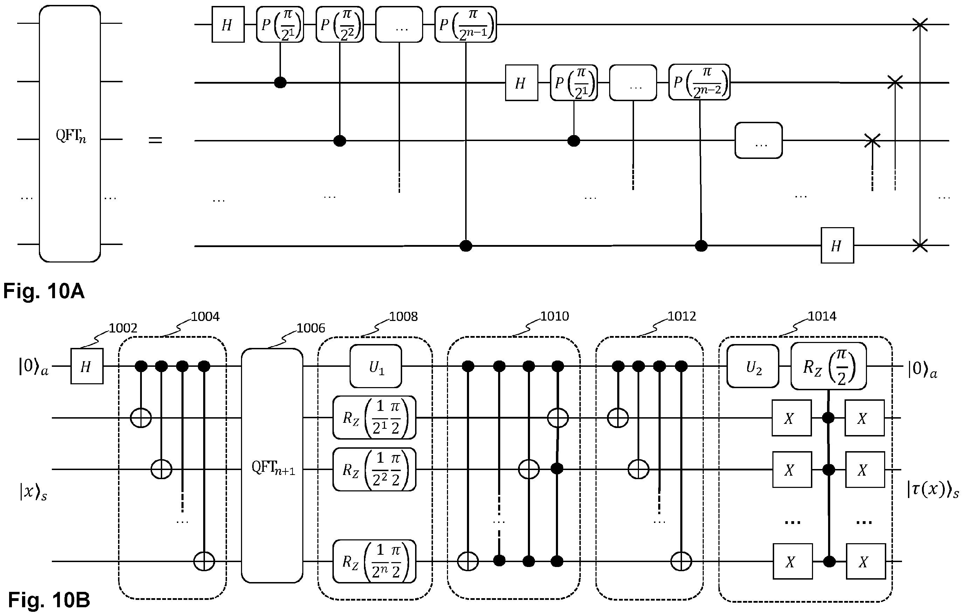

**Fig. 10A** schematically shows an example of a quantum Fourier transform circuit, as may be used in layer **1006** of the quantum Chebyshev transform shown in **Fig. 10B.**

**Fig. 10B** schematically shows an example of a Quantum Chebyshev transform circuit according to an embodiment. This circuit maps computational basis states $\{|j\rangle\}_{j=0}^{N-1}$ into Chebyshev states $\left\{\left|\tau\left(x_j^{\mathrm{Ch}}\right)\right\rangle\right\}_{j=0}^{N-1}$. Similar to the Chebyshev amplitude encoding, this circuit uses an ancillary qubit. In the depicted example, an Hadamard gate is applied to the ancilla, followed by a CNOT-ladder controlled by the ancilla.

The transform involves a quantum Fourier transform (QFT) circuit (described above with reference to **Fig. 10A**) applied to $n + 1$ qubits ($n$ encoding qubits plus one ancilla), followed by phase-adjusting and permutation circuits. Here, single-qubit rotations of the form

$$U_1 = P\left(-\frac{\pi}{2}N\right) R_z\left(-\pi\frac{N-1}{2N}\right) \text{ and } U_2 = P\left(-\frac{\pi}{2}\right) R_y\left(-\frac{\pi}{2}\right) \qquad (94)$$

are used with the single-qubit phase shift gate $P(\Phi) = \mathrm{diag}\{1, \exp(\mathrm{i}\,\Phi)\}$. The unitary operators $U_1$ and $U_2$ applied to the ancilla can be combined into a single-qubit gate $U_a = U_2\,U_1$.

The quantum Chebyshev transform shown in **Fig. 10B** can be understood as a specific version of the (discrete) cosine transform. Considering the normalized output states evaluated at specific $x = \frac{N}{\pi}\arccos\left(x_j^{\mathrm{Ch}}\right) = j + \frac{1}{2}$ with the integer $j \in [0, N-1]$, on the condition of ancilla bit measured in $|0\rangle$ state; in this case, each of them corresponds to the $(j + 1)^{\mathrm{th}}$ column of the type-II discrete cosine transform matrix, $\mathrm{DCT^{II}}_N$, and they form a set of orthonormal basis states.

$$DCT_N^{II} := \frac{\sqrt{2}}{\sqrt{N}}\left(c_k \cos\left(\frac{\left(j+\frac{1}{2}\right)}{N}\,k\,\pi\right)\right)_{k,j=0,\ldots,N-1}, \qquad c_k = \begin{cases} \frac{1}{\sqrt{2}}, & k = 0 \\ 1, & k \neq 0 \end{cases} \qquad (95)$$

Therefore, the above-mentioned Chebyshev feature map circuit takes at least $N$ times to construct a full $\mathrm{DCT^{II}}_N$ matrix. **Fig. 10B** shows an alternative approach similar to quantum Fourier transform (QFT) to obtain the quantum Chebyshev transform (QChT) equivalent to $\mathrm{DCT^{II}}_N$.

The circuit coverts a complex-valued matrix into a purely real matrix through a series of unitary gates. The circuit **1000** starts with a Hadamard gate **1002** on the ancilla (being considered the most significant bit), followed by a sequence of controlled-NOT gates **1004** applied on the other $n$ qubits to create a $(n + 1)$-qubit entangled state. This is followed by a $(n + 1)$ QFT circuit **1006** applied to both the ancillary and encoding qubits. After the QFT, controlled-$R_z$ gates **1008** are

$$U_1 = P\left(-\frac{\pi}{2}N\right) R_z\left(-\pi\frac{N-1}{2N}\right)$$

introduced to adjust the relative phase of the encoding qubits, and a unitary operator is applied to the ancilla.

The resulting state (behind the $U_1$ gate) has purely real amplitude of $|0\rangle_a|\Phi\rangle$ and a purely imaginary amplitude of $|1\rangle_a|\Phi\rangle$ for any $n$-qubit intermediate state $|\Phi\rangle$. A permutation circuit **1010** is used to reorder amplitudes of the conditioned states, i.e., $|1\rangle_a |\Phi\rangle \rightarrow |1\rangle_a |(\Phi + N - 1) \bmod N\rangle$, followed by a layer **1012** of n-controlled-NOT gates to ensure that the amplitude of $|0\rangle_a|\Phi\rangle$ ($|1\rangle_a|\Phi\rangle$) returns to purely real (imaginary). This is followed by a layer **1014** comprising a unitary

$$U_2 = P\left(-\frac{\pi}{2}\right) R_y\left(-\frac{\pi}{2}\right)$$

operator applied to the ancilla, and then multi-controlled $R_x$ gates. Finally, on the condition of the input and output ancilla bits being respectively initialized with and measured in the $|0\rangle$ state (not shown), the quantum Chebyshev transform is obtained.

A representative example of the Chebyshev transform matrix for $n = 2$ is given by

$$M_{\text{QChT}}(2) = \frac{1}{\sqrt{2}} \begin{pmatrix} \cos\frac{\pi}{4} & \cos\frac{\pi}{4} & \cos\frac{\pi}{4} & \cos\frac{\pi}{4} \\ \cos\frac{1\pi}{8} & \cos\frac{3\pi}{8} & \cos\frac{10\pi}{8} & \cos\frac{7\pi}{8} \\ \cos\frac{2\pi}{8} & \cos\frac{6\pi}{8} & \cos\frac{10\pi}{8} & \cos\frac{14\pi}{8} \\ \cos\frac{3\pi}{4} & \cos\frac{9\pi}{8} & \cos\frac{15\pi}{8} & \cos\frac{21\pi}{4} \end{pmatrix} \tag{96}$$

where only the top-left corner of a three-qubit unitary is shown, and similar structure block with sine-valued coefficients appears in the right-bottom corner. For a general $n$-qubit quantum Chebyshev transformation, the unitary transformation can be expressed as

$$\hat{U}_{\text{QChT}}(n) = \sum_{j=0}^{N-1} |\tau(x_j^{\text{Ch}})\rangle \langle j| \tag{97}$$

where $|\tau(x)\rangle$ is given by Equation 11 and $x_j^{\text{Ch}}$ are the Chebyshev nodes.

To the circuit illustrated in **Fig. 10B**, a permutation circuit identical to block **1010** can be appended, in order to obtain the type II discrete sine transform. In this case, the input and output ancilla bits are initialized with and measured in $|1\rangle$, respectively.

The quantum Chebyshev transform circuit **1000** can be run in reverse direction to perform the inverse quantum Chebyshev transform, which equivalently maps Chebyshev basis states $\left\{ |\tau(x_j^{\text{Ch}})\rangle \right\}_{j=0}^{N-1}$ to computational basis states $\left\{ |j\rangle \right\}_{j=0}^{N-1}$.

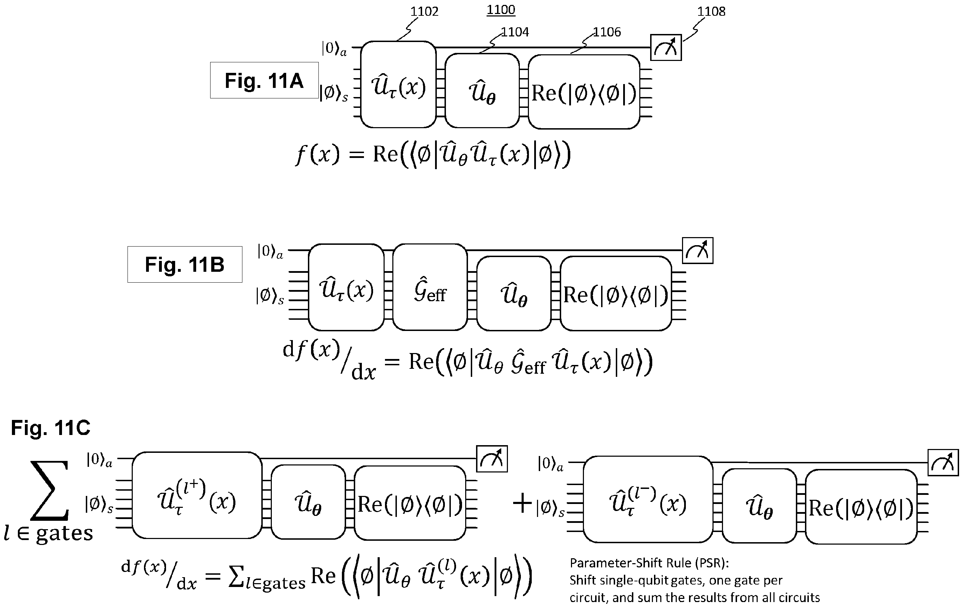

**Fig. 11A** shows a reference quantum machine learning model (a quantum neural network, QNN-type model). The circuit **1100** comprises a Chebyshev feature map $\hat{U}_\tau(x)$ **1102** (corresponding to block **910** in **Fig. 9A),** a variational circuit parametrized by a parameter $\theta$ and a cost function $\text{Re}(|\varnothing\rangle\langle\varnothing|)$ **1106,** corresponding to projection on the zero state. A measurement **1108** on the ancilla (corresponding to block **910)** is included to select the appropriate sum term, as explained above with reference to **Fig. 9A.**

One option to differentiate the circuit with respect to the input value x is to use the parameter shift rule, which is well-known in the art, illustrated in **Fig. 11C.** This approach is, for example, valid in the training stage when the cost function corresponds to, for example, a projection on the zero state (including ancilla qubit). Application of the parameter shift rule comprises executing the circuit twice for each gate that is dependent on the variable with respect to which the circuit is being differentiated (in this case, the x-dependent gates corresponding to $e^{ix}$ and $e^{-i2x}$, shown in blocks **904** and **906** in **Fig. 9A),** once with the x-dependent rotation angle shifted by $+\pi/2$ and once with the x-dependent rotation angle shifted by $-\pi/2$, and summing the results. As there are two x-dependent gates applied to each qubit, the total number of parameter shifts (and hence terms in the final sum) is $4n$, with $n$ the number of encoding qubits. In the notation used in the figure, $\hat{U}_\tau^{(l^+)}(x)$ means that the rotation gate angle of gate $l$ is shifted with $\pi/2$, and analogously $l^-$ refers to a gate angle shift with $-\pi/2$). So, for example, the gate

$$\tilde{P}_{2^j}^s(x) = P_{2^j}(s \arccos x) = \text{diag}\left[1, \exp\left(i\, s\frac{N}{2^j} \arccos(x)\right)\right] \tag{98}$$

is shifted to

$$\text{diag}\left[1, \exp\left(i\left(s\frac{N}{2^j}\arccos(x) + \frac{\pi}{2}\right)\right)\right] \tag{99}$$

(and analogously for $-\pi/2$), one gate at a time (in the current example, essentially, once for each pair $(j, s) \in \{0,..., n-1\} \times \{1, -2\}$). This results in $4n$ modified circuits, which are summed to obtain the derivative circuit.

In cases where mid-circuit measurements are possible, an alternative differentiation method may be applied. In this case, the controlled phase rotations can be decomposed using CNOT conjugation, and two shifts per individually reuploaded parameter x can be applied. This is repeated twice for different bases of the measurement outcomes. Thus, in total, the Chebyshev feature map can be differentiated with $4n$ parameter shifts.

The above approaches are described in more detail in Kyriienko et al., 'Generalized quantum circuit differentiation rules', Phys. Rev. A 104 (052417) -which is hereby incorporated by reference-, in particular in sections II.B and II.C.

Another option, illustrated in **Fig. 11B,** is to differentiate the feature map formally, extracting an effective generator $\hat{\mathcal{G}}_{\text{eff}}$, and taking derivatives as a linear combination of unitaries. For this, the (not necessarily normalised) state $|\tau(x)\rangle$ from eq. (11) is considered, where all the amplitudes are scaled Chebyshev polynomials. The normalised version of this is prepared by the Chebyshev feature map. When taking the derivative with respect to x of a model containing $|\tau(x)\rangle$, the resulting model will contain $|\tau'(x)\rangle$ terms. This can be considered a state with each amplitude as scaled Chebyshev polynomial derivatives.

The Chebyshev polynomials and their derivatives are related by:

$$T_k'(x) = k\, U_{k-1}(x) \qquad\qquad (100)$$

where $U_k(x)$ denotes a Chebyshev polynomial of the second kind of order $k$. This can then be further expanded to:

$$T_0'(x) = 0 \qquad\qquad (101)$$

$$T_{2k}'(x) = 4k \sum_{m=1}^{k} T_{2m-1}(x) \qquad\qquad (102)$$

$$T_{2k+1}'(x) = (4k+2) \sum_{m=1}^{k} T_{2m}(x) + (2k+1)\, T_0(x) \qquad\qquad (103)$$

This means the derivative of a Chebyshev polynomial is a linear combination of lower order Chebyshev polynomials. Therefore, an effective operator $\hat{\mathcal{G}}_{\text{eff}}$ can be extracted such that:

$$|\tau'(x)\rangle = \hat{\mathcal{G}}_{\text{eff}} |\tau(x)\rangle. \qquad\qquad (104)$$

The operator $\hat{\mathcal{G}}_{\text{eff}}$ is non-unitary, but can be implemented using known techniques to implement non-unitary operators, such as a linear combination of unitaries or embedding in a higher-order space.

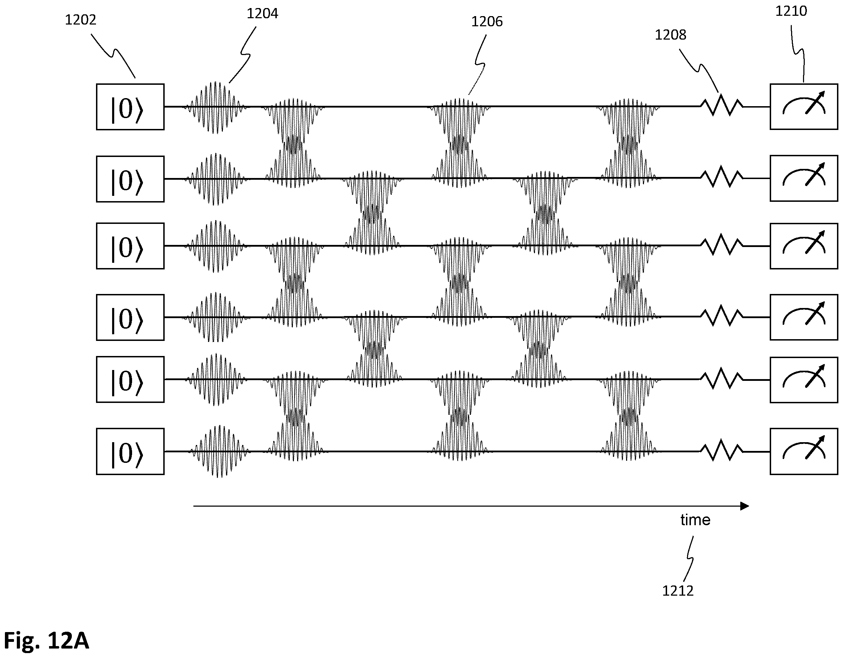

**Fig. 12A** is a hardware-level schematic of the actions effectuating the logical operations shown in circuit diagrams such as discussed above. Unitary operators, e.g. those to encode the quantum kernel feature map and derivatives thereof, can be decomposed into a sequence of logical gate operations. These logical gate operations are transformations in a quantum Hilbert space over the qubits encoding an input parameter. In order to transform the internal states of these qubits, a classical control stack is used to send pulse information to a pulse controller that affects one or more qubits. The controller may send a sequence of such pulses in time and for each qubit independently. An initialization pulse is used to initialize the qubits into the $|0\rangle$ state **1202.** Then, for example a series of single-qubit pulses is sent to the qubit array in **1204,** which may apply a single-layer feature map. Additionally, two-qubit pulse sequences can be used to effectively entangle multiple qubits with a feature map **1206.** The duration, type, strength and shape of these pulses determine the effectuated quantum logical operations. **1208** indicates a 'break' in the depicted timeline, which means the sequence of gates may be repeated in a similar fashion in the direction of the time axis **1212.** At the end of the pulse sequences, one or more of the qubits are measured **1210.**

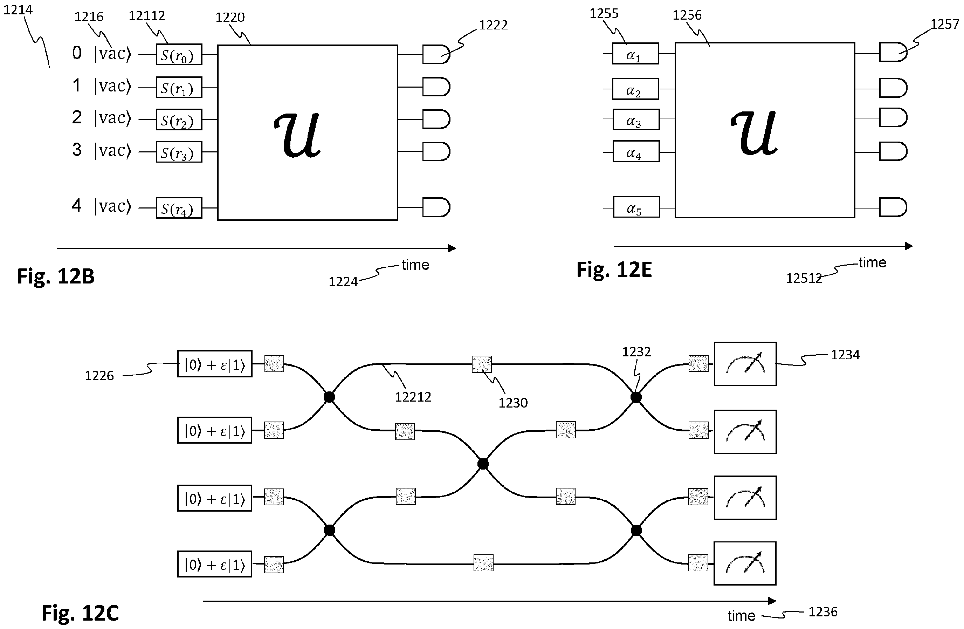

**Fig. 12B** is a hardware-level schematic of the actions effectuating the logical operations shown in circuit diagrams such as **Figs. 4-9,** specified for a photonic/optical quantum processor. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send pulse information to a pulse controller that affects one or more modes. The controller may formulate the programmable unitary transformations in a parametrised way.

Initially the modes **1214** are all in the vacuum state **1216,** which are then squeezed to produce single-mode squeezed vacuum states **1218.** The duration, type, strength and shape of controlled-optical gate transformations determine the effectuated quantum logical operations **1220.** At the end of the optical paths, one or more modes are measured with photon-number resolving, Fock basis measurement **1222,** tomography or threshold detectors.

**Fig. 12C** is a hardware-level schematic of the actions effectuating the logical operations shown in circuit diagrams such as **Figs. 4-9,** specified for a Gaussian boson sampling device. Unitary operators, e.g. those used to encode the quantum kernel feature map and derivatives thereof, can be decomposed into a sequence of optical gate operations. These optical gate operations are transformations in the quantum Hilbert space over the optical modes. In order to transform the internal states of these modes, a classical control stack is used to send information to optical switches and delay lines. The controller may formulate the programmable unitary transformations in a parametrised way.

Initially the modes **1226** are all in a weak coherent state, which is mostly a vacuum state with a chance of one or two photons and negligibly so for higher counts. Subsequently, the photons travel through optical waveguides **1228** through delay lines **1230** and two-mode couplers **1232** which can be tuned with a classical control stack, and which determines the effectuated quantum logical operations.

At the end of the optical paths, one or more modes are measured with photon-number resolving **1234,** or threshold detectors.

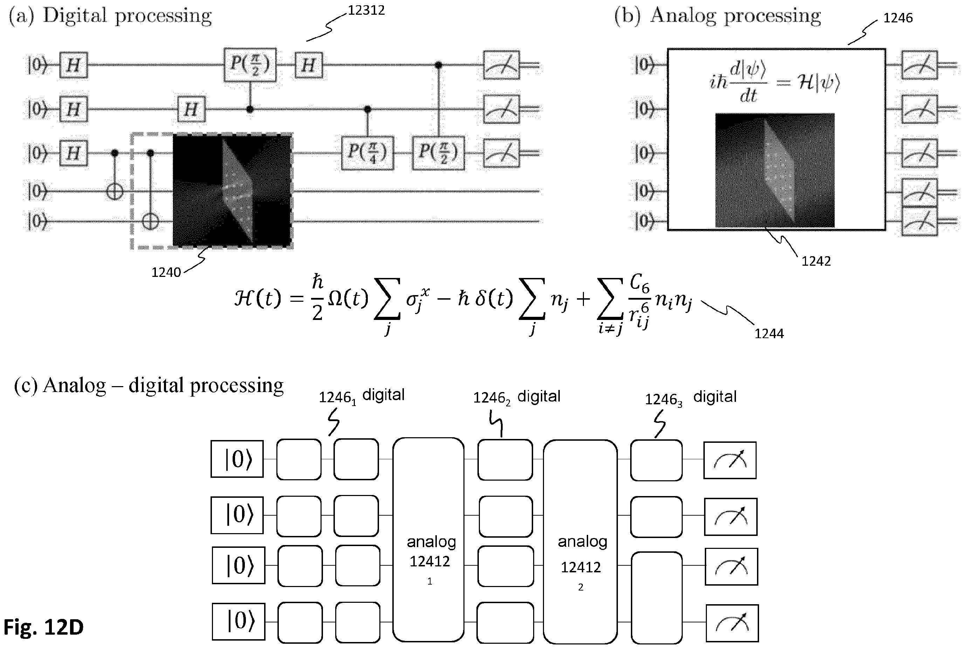

**Fig. 12D** is a hardware-level schematic of the actions effectuating the logical operations shown in circuit diagrams such as **Figs. 4-9,** which may be executed on a neutral-atom-based quantum computer. On this type of hardware, unitary operators, e.g. those used to encode the quantum feature map and derivatives thereof, can be decomposed in two different kinds of operations: digital or analog. Both of these operations are transformations in the quantum Hilbert space over atomic states.

Schematic (a) of **Fig. 12D** depicts a digital quantum circuit **1238,** wherein local laser pulses may be used to individually address neutral atoms to effectuate transitions between atomic states which effectively implement sets of standardized or 'digital' rotations on computational states. These digital gates may include any single-qubit rotations, and a controlled-pauli-Z operation with arbitrary number of control qubits. Additionally, such digital gate operations may also include 2-qubit operations.

Schematic (b) of **Fig. 12D** depicts an analog mode **1246** of operation, wherein a global laser light pulse may be applied to groups of, or all, atoms at the same time, with certain properties like detuning, Rabi frequencies and Rydberg interactions to cause multi-qubit entanglement thereby effectively driving the evolution of a Hamiltonian **1244** of the atomic array in an analog way. The combined quantum wavefunction evolves according to Schrodinger's equation, and particular, unitary operators $\hat{\mathcal{U}} = \mathrm{e}^{-\mathrm{i}\hat{\mathcal{H}} t}$, where $\hat{\mathcal{H}}$ denotes the Hamiltonian and t the time, can be designed by pulse-shaping the parametrised coefficients of the Hamiltonian in time. This way, a parametric analog unitary block can be applied, which entangles the atoms and can act as a variational ansatz, or a feature map, or other entanglement operation.

The digital and analog modes can be combined or alternated, to yield a combination of the effects of each. Schematic (c) of **Fig. 12D** depicts an example of such digital-analog quantum circuit, including blocks $\mathbf{1246_{1\text{-}3}}$ of digital qubit operations (single or multi-qubit) and analog blocks $\mathbf{1248_{1\text{-}3}}$.

It can been proven that any computation can be decomposed into a finite set of digital gates, including always at least one multi-qubit digital gate (universality of digital gate sets). This includes being able to simulate general analog Hamiltonian evolutions, by using Trotterization or other simulation methods. However, the cost of Trotterization is expensive, and decomposing multi-qubit Hamiltonian evolution into digital gates is costly in terms of number of operations needed.

Digital-analog circuits define circuits which are decomposed into both explicitly-digital and explicitly-analog operations. While under the hood, both are implemented as evolutions over controlled system Hamiltonians, the digital ones form a small set of pre-compiled operations, typically but not exclusively on single-qubits, while analog ones are used to evolve the system over its natural Hamiltonian, for example in order to achieve complex entangling dynamics.

It can be shown that complex multi-qubit analog operations can be reproduced/simulated only with a relatively large number of digital gates, thus posing an advantage for devices that achieve good control of both digital and analog operations, such as neutral atom quantum computer. Entanglement can spread more quickly in terms of wall-clock runtime of a single analog block compared to a sequence of digital gates, especially when considering also the finite connectivity of purely digital devices.

Further, digital-analog quantum circuits for a neutral quantum processor that are based on Rydberg type of Hamiltonians can be differentiated analytically so that they can be used in variational and/or quantum machine learning schemes, including the differential quantum circuit (DQC) schemes as described in this application.

In order to transform the internal states of these modes, a classical control stack is used to send information to optical components and lasers. The controller may formulate the programmable unitary transformations in a parametrised way.

At the end of the unitary transformations, the states of one or more atoms may be read out by applying measurement laser pulses, and then observing the brightness using a camera to spot which atomic qubit is turned 'on' or 'off', 1 or 0. This bit information across the array is then processed further according to the embodiments.

**Fig. 12E** is a hardware-level schematic of the actions effectuating the logical operations shown in **Figs. 4-9,** specified for a photonic/optical quantum processor. The quantum model can be decomposed into a sequence of optical gate operations. These optical gate operations are transformations in the quantum Hilbert space of the photons. In order to transform the internal states of these photons, a classical control stack is used to send information to a universal multiport interferometer. The controller may formulate the programmable unitary transformations in a parameterized way.

Initially the photons **1255** are in Fock states, weak coherent states or coherent states. The duration, type, strength and shape of controlled-optical gate transformations determine the effectuated quantum logical operations **1256.**

At the end of the optical paths, the modes are measured with photon-number resolving, Fock basis measurement **1257,** tomography or threshold detectors.

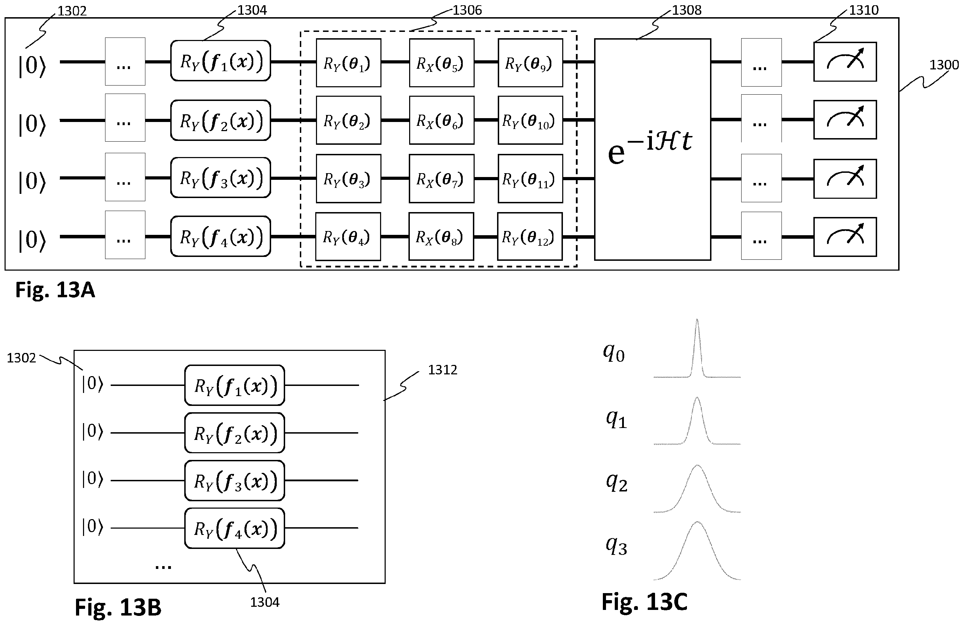

The hardware implementation shown in **Fig. 12A-12E** may also be used to implement the quantum circuits shown in **Fig. 13-16,** as applicable.

**Fig. 13A** depicts a system describing a Digital-Analog implementation of a quantum algorithm. In particular, **Fig. 13A** represents a Digital-Analog implementation where the qubit interactions can be switched on and off and there exists single-qubit addressability for the application of single-qubit gates, a process described in **1300.** In order to transform the internal states of these qubits, a classical control stack may be used to send information to a controller that affects one or more qubits. The controller may send multiple information carriers (e.g., pulses) in time and for each qubit independently. An initialization protocol is used to initialize the qubits, in this example into the $|0\rangle$ state **1302.** The current example shows only four qubits, but the same principles may be extended in a straightforward manner to systems with more (or less) than four qubits.

Then, a quantum feature map is applied **1304** to encode quantum information, e.g., an input variable, into a Hilbert space associated with the quantum processor.

Following application of the feature map, a variational Ansatz is applied, implemented as a variational quantum circuit **1306.** In the current example, the variational Ansatz comprises three single-qubit gates $R_Y$ - $R_X$ - $R_Y$ with different rotational angles $\theta_i$. These single-qubit gates are typically sets of standardized or 'digital' rotations on computational states applied to different qubits with different rotation angles/parameters. These digital gates include any single-qubit rotations according to the $\theta_i$ argument of the rotation. A single rotation/single-qubit gate is not sufficient to perform arbitrary rotation regardless of the parameter/angle since it can only rotate over a single axis. In order to accomplish a general rotation block, three gates in series with different rotation angles/parameters can be used, in this example represented by a block of single-qubit gates **1306.**

Then, the entanglement in this Digital-Analog approach is generated by a wavefunction evolution **1308,** described by the block $e^{-i\mathcal{H}t}$. During this evolution, the qubits are interacting amongst themselves, letting the system evolve for a specified amount of time. This process produces the necessary entanglement in the system. The combined quantum wavefunction evolves according to Schrödinger's equation, and particular unitary operators $\hat{\mathcal{U}} = e^{-i\mathcal{H}t}$ in which $\mathcal{H}$ is the Hamiltonian of the system (for example, for neutral atoms the Hamiltonian that governs the system is $\mathcal{H} = \sum_{j \neq k} \left(\frac{C_6}{r_j k^6}\right) * \hat{n}_j * \hat{n}_k$ with $\bar{\bar{n}}$ being the state occupancy of the Rydberg atoms), and t is the evolution time. In this way, a parametric analog unitary block can be applied, which entangles the atoms and can act as a variational Ansatz.

After the evolution of the wavefunction **1308,** another set of single-qubit gates may be applied, similar to the process described in the block of gates $R_Y$ - $R_X$ - $R_Y$ **1306.**

Then, the wavefunction may be evolved once more, and finally a measurement in the computational basis occurs as described in **1310.**

Optionally, additional steps may be included, represented by the ellipses, e.g., before, after, or in between the blocks shown. For example, a different initial state than $|0\rangle$ may be prepared prior to application of the feature map. Furthermore, the blocks can be executed in a different order, for instance, in some embodiments, block **1308** might precede block **1306.** One or more of the blocks **1304-1308,** or variations thereof, may be repeated one or more times prior to the measurement **1310.**

**Fig. 13B** represents a typical quantum feature map **1312** that starts by preparing the quantum register to the $|0\rangle$ quantum state **1302** and then applying single-qubit rotations in all of the qubits with (typically) different rotation angles **1304.** In this example, single qubit rotations **1304** (here chosen as $R_Y(f_i(x))$) act on each qubit individually and are parametrized by a variable x. For a non-linear feature map encoding such as the Chebyshev feature map, the variable x may be used as an angle of rotation.

The application **1304** of one rotation operation to each qubit in a register may be referred to as a single layer of rotation operations. This type of encoding of classical information into quantum states is known as angle encoding, which means that a data vector is represented by the angles of a quantum state. Angle encoding can be found in many Quantum Machine Learning algorithms, with the main advantage being that it only requires $n = \log NM$ qubits to encode a dataset of $M$

inputs with $N$ features each. Thus, considering an algorithm that is polynomial in $n$, it has a logarithmic runtime dependency on the data size.

**Fig. 13C** illustrates different pulses (potentially differing in pulse duration and/or amplitude/height) that can be sent to the quantum circuit (different qubits) to encode the classical information. The angle of the rotation that is described by the $f_i(x)$ dictates the duration and geometry of the pulse.

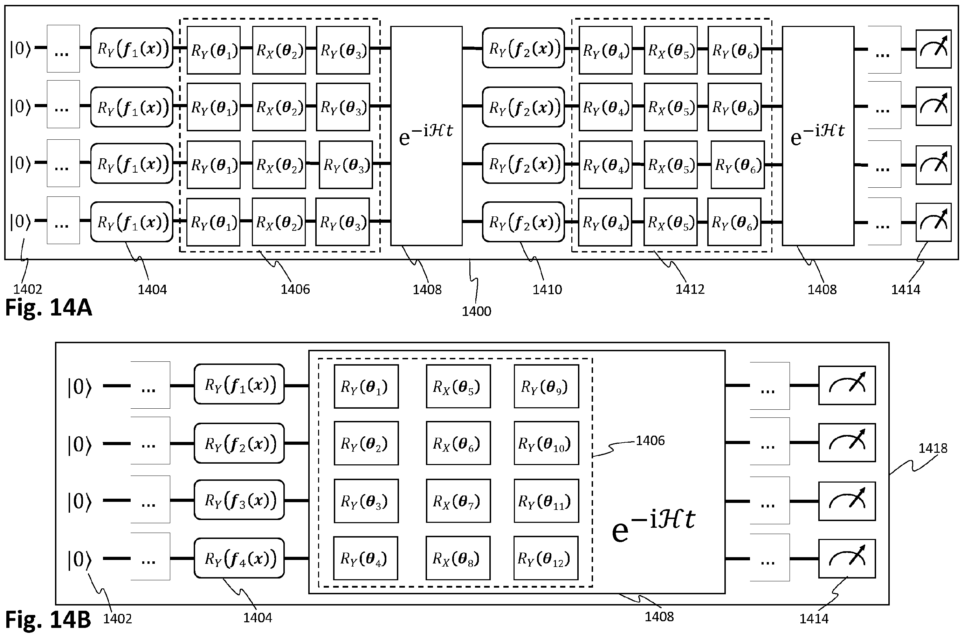

**Fig. 14A** presents a quantum circuit based on a Digital-Analog implementation **1400** that has no single-qubit addressability and uses a wavefunction evolution that can be turned on and off for the entanglement generation. **Fig. 14A** differs from **Fig. 13A** in that it shows a technique known as data re-uploading that alters the quantum feature map **1404** and **1410.** Loading classical data into a quantum system is a non-trivial task, and uploading large amounts of data makes it an even more critical issue. However, when the case of big-data is not considered, techniques like data re-uploading can be utilized. As the name suggests, this entails uploading the classical data multiple times, and encode them via rotational angle/parameter encoding into single-qubit rotations throughout the quantum circuit. Such a data re-uploading technique may start by setting the quantum register to an initial state, e.g., the all-zero state **1402,** followed by angle encoding that is based on a feature map **1404,** in this case a tower feature map.

Following that, as already explained above with reference to **1306,** three single-qubit gates in series are used to perform a general rotation block that acts as the Ansatz **1406.** In this example the encoding is done through the $\theta_i$ variable of the $R_Y$ - $R_X$ - $R_Y$ rotations; however, any type of combined rotations of the type $(R_X, R_Y, R_Z)$ could be applied here. Since there is no single-qubit addressability in this example, each $R_Y$ and $R_X$ gate is applied at all qubits simultaneously with the same rotation angle $\theta_i$. Subsequently, the wavefunction is allowed to evolve for a specified amount of time **1408.**

Then the classical data are re-uploaded through angle encoding into single-qubit rotations **1410.** However, each time the (same) data are uploaded, the information is encoded using different angles than in the previous data uploading steps. For example, the amount of rotation may be doubled in each data (re-)uploading step **1404,1410** (i.e., the rotational angle of the might be increasing as 1-2-4, etc.).

Once again, the rotations $R_Y$ - $R_X$ - $R_Y$ are applied to all qubits simultaneously with the same rotation angle for each single qubit gate, but different than **1406.** The classical information can be repeatedly encoded into the quantum feature map through the data re-uploading technique, while changing the angle of the single qubit rotational angle **(1404, 1410,** etc.) every time after the wavefunction evolution. The resulting quantum feature map can become more expressive as a tower feature map by doing this process of serial data re-uploading with different levels of rotational angles every time the re-uploading is done.

**Fig. 14B** illustrates a different (and at current technology levels more realistic) form of a Digital-Analog implementation. In this implementation, the system has single-qubit addressability, but the wavefunction evolution cannot be turned off, thus staying always on. This system requires less control over the qubit interactions (since they are always on) and only requires single-qubit addressability.

The single-qubit gates are applied while the wavefunction evolution (qubit interaction) is also happening. In the shown example, the quantum circuit **1418** starts by encoding information in the $|0\rangle$ quantum state **1402,** followed by a quantum feature map **1404** (analogous to **1304).**

Then, a variational Ansatz is applied, comprising both wavefunction evolution $e^{-i\mathcal{H}t}$ **1408** and simultaneous application of a block of single-qubit gates **1416** (similar to block **1306).** After multiple repetitions of block **1416,** each time with different rotational angles at the single-qubit gates, the circuit ends with a measurement in the computational basis **1414.**

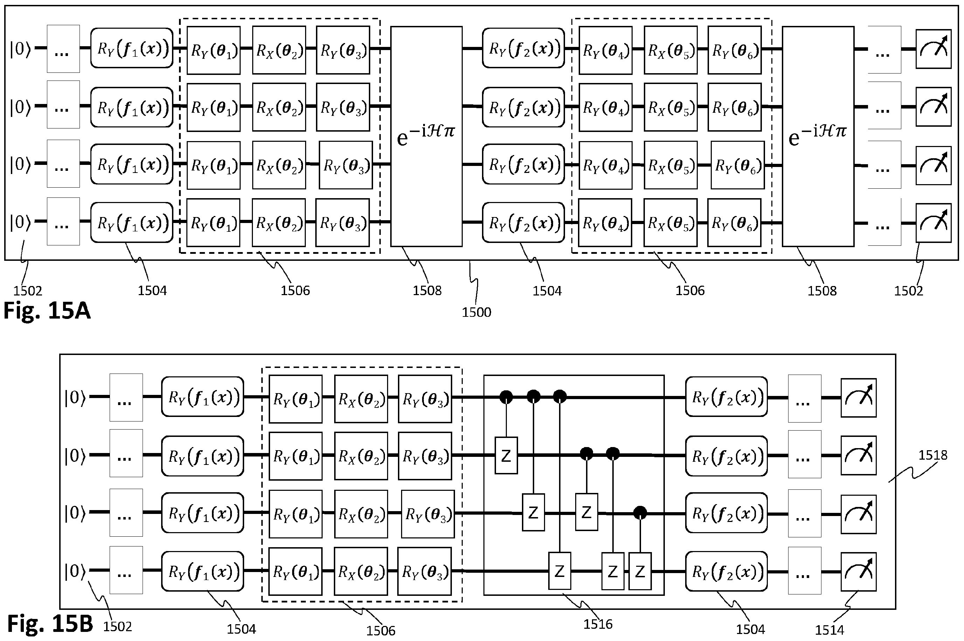

**Fig. 15A** illustrates a quantum circuit **1500** that implements a Digital-Analog implementation with single-qubit addressability, wherein the wavefunction evolution (e.g., atom interactions) can be turned on and off. This quantum circuit is equivalent to the quantum circuit in **Fig. 14A,** with the time of the wavefunction evolution **1508** being t = $\pi$ (in dimensionless coordinates), while all other operations are the same as the ones described in **1400.** The same technique of data re-uploading with a tower feature map **1504, 1510** and the same Ansatz comprising single-qubit gates **1506,1512** followed by wavefunction evolution **1508** are used (all similar to **1400).**

The reason that such a specific time period for the wavefunction evolution **1508** is selected, is due to the fact that such evolution results in the application of Controlled-Z (CZ) gates between pairs of qubits. The benefit of describing the wavefunction evolution as a set of CZ gates lies in the fact that this Digital-Analog implementation of a quantum circuit resembles the structure of the equivalent Digital quantum circuit, which instead of the operation **1508** performs a set of CNOT gates between pairs of qubits included in the quantum circuit. This allows more straightforward comparisons to be drawn between the Digital and Analog implementation of such feature maps, and to evaluate their relative performance.

**Fig. 15B** illustrates a quantum circuit that implements a Digital-Analog implementation with single-qubit addressability **1518,** similar to **1500,** but with the entanglement generated via CZ gates between the qubits, resembling the atom interaction / entanglement generation.

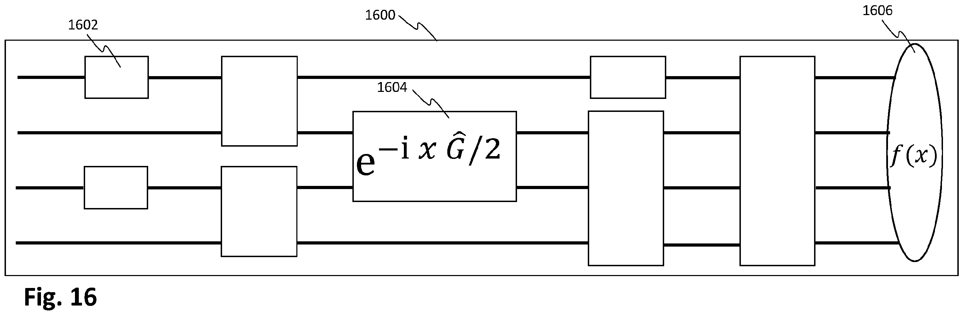

**Fig. 16** presents a workflow for generalized circuit differentiation. In Quantum Machine Learning (QML) algorithms, various quantum feature maps and Parametric Quantum Circuits (PQCs) are typically utilised to express the circuit required to solve a particular problem. These quantum circuits contain tuneable parameters that use a classical optimizer to find the optimal values of the parameters that exist for that formulation. The differentiation required for most parameter optimization methods can be achieved in various ways, with the most common one being the Parameter Shift Rule (PSR). An example of such kind of differentiation for quantum feature maps is presented in **Fig. 8.**

One way to calculate analytic derivatives of quantum circuits is by measuring overlaps between quantum states.

Analytic derivatives can be used for differentiating unitaries like the one presented in **1604,** e.g., $\hat{U} = e^{-\mathrm{i}\,x\,\hat{G}/2}$ generated by arbitrary Hermitian generator $\hat{G}$. However, in order to have a less resource-intensive method for differentiation, the parameter shift rule (PSR) was proposed. The PSR algorithm can provide analytic gradient estimations through measurement of the expectation values, with gate parameters being shifted to different values. The PSR algorithm is much used to perform differentiation for QML algorithms; however, it is only valid for a specific type of generators, viz., generators that are involutory or idempotent. This is because the full analytic derivative only requires 2 measurements of expectation values (2 unique eigenvalues). Although this simplifies the differentiation protocol, it also restricts it to only work for a certain type of generators.

Therefore, as an improvements and generalizations of the PSR algorithm, in **1600** a scheme for a Generalized Parametric Shift Rule (GPSR) algorithm is shown. Such approach allows for differentiating generic quantum circuits with unitaries generated by operators with a rich spectrum (i.e., not limited to idempotent generators). The GPSR algorithm is based on spectral decomposition, and showcases the role of the eigenvalue differences (spectral gaps) during differentiation for the generator spectrum. Such approach works for multiple non-degenerate gaps, in contrast to the PSR that is only valid for involutory and idempotent operators with a single unique spectral gap.

A workflow for generalized circuit differentiation can be described as follows: create a quantum circuit that encodes the function $f$ similar to **1600** including single- and multi-qubit gates **1602.** Pick a unitary operator such as

$$\hat{U}(x) = \exp\left(-\mathrm{i}\,x\,\hat{G}/2\right)$$

**1604** that is parametrized by some tuneable parameter x, and study the spectrum of its generator G. Then, using unique and positive spectral gaps, a system of equations that includes the spectral information can be created, alongside the calculated parameter shifts, and the measured function expectation values as shifted parameters. The solution of such system can provide the analytical derivative for any general generator G and thus perform GPSR. GPSR is described in more detail in Kyriienko et al., 'Generalized quantum circuit differentiation rules', Phys. Rev. A 104 (052417), which is hereby incorporated by reference.

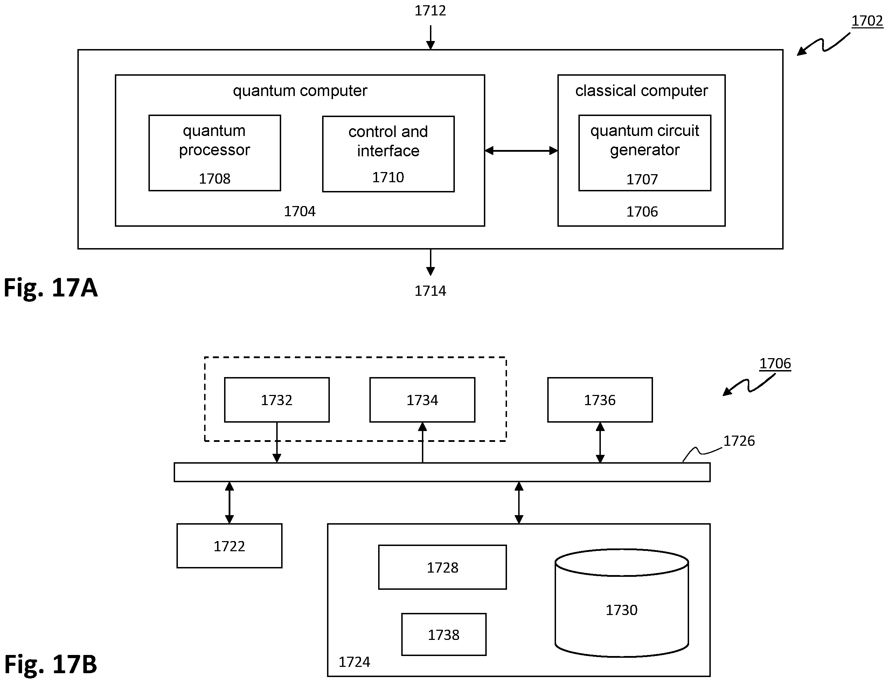

**Fig. 17A** depicts a system for determining a solution for an computational problem using a hybrid quantum computer system according to an embodiment. The system **1702** may include a quantum computer system **1704** comprising one or more quantum processors **1708,** e.g. a gate-based qubit quantum processor, and a controller system **1710** comprising input output (I/O) devices which form an interface between the quantum processor and the outside world, e.g., the one or more classical processors of a classical computer **1706.** For example, the controller system may include a system for generating control signals for controlling the quantum processing elements. The control signals may include for example a sequence of pulses, e.g. microwave pulses, voltage pulses and/or optical pulses, which are used to manipulate qubits. Further, the controller may include output device, e.g. readout circuits, for readout of the qubits and the control signals for readout of the quantum processing elements, e.g. a readout pulse for reading a qubit. In some embodiments, at least a part such readout circuit may be located or integrated with the chip that includes the qubits.

The system may further comprise a (purely classical information) input **1712** and an (purely classical information) output **1714.** The data processor systems may be configured to solve an optimization problem using the quantum computer. Input data may include information about the optimisation problem one wishes to solve. This information may include training data such as input-output pairs, a differential equation, boundary conditions, initial values, regularization values, etc. The input data may be used by the system to construct quantum circuits, in particular quantum feature maps and/or parametrized quantum circuits, and to classically calculate values, e.g. sequences of pulses, which may be used to initialize and control qubit operations according to the quantum circuit. To that end, the classical computer may include a quantum circuit generator **1707.** The input data may be used by the system to classically calculate values, e.g. parameter settings, which may be used to initialize the quantum circuit that is implemented on the quantum processor. Similarly, output data may include loss function values, sampling results, correlator operator expectation values, optimisation convergence results, optimized quantum circuit parameters and hyperparameters, and other classical data.

Each of the one or more quantum processors may comprise a set of controllable quantum processing elements, e.g. a set of controllable two-level systems referred to as qubits. The two levels are $|0\rangle$ and $|1\rangle$ and the wave function of a N-qubit quantum processor may be regarded as a complex-valued superposition of $2^N$ of these (distinct) basis states. The embodiments in this application however are not limited to qubits but may include any multi-level quantum processing elements, e.g. qutrits, that is suitable for performing quantum computation. Examples of such quantum processors include noisy intermediate-scale quantum (NISQ) computing devices and fault tolerant quantum computing (FTQC) devices.

The quantum processor may be configured to execute a quantum algorithm in accordance with the gate operations of a quantum circuit. The quantum processor may be implemented as a gate-based qubit quantum device, which allows initialization of the qubits into an initial state, interactions between the qubits by sequentially applying quantum gates between different qubits and subsequent measurement of the qubits' states. To that end, the input devices may be configured to configure the quantum processor in an initial state and to control gates that realize interactions between the qubits. Similarly, the output devices may include readout circuitry for readout of the qubits which may be used to determine a measure of the energy associated with the expectation value of the Hamiltonian of the system taken over the prepared state.

Furthermore, the one or more quantum processors may comprise a set of continuous variable systems, such as optical or photonic quantum computers. Furthermore, the quantum processor may comprise a Gaussian Boson Sampling device as described above with reference to **Fig. 12C** or any of the other hardware described above with reference to **Fig. 12A-E.**

In some embodiments, the first data processor system may be implemented as a software program for simulating a quantum computer system **1704** comprising a quantum processor system **1708.** Hence, in that case, the software program may be a classical software program that runs a classical computer **1706** so that quantum algorithms can be developed, executed and tested on a classical computer without requiring access to a hardware implementation of the quantum processor system.

**Fig. 17B** is a block diagram illustrating an exemplary classical data processing system described in this disclosure, for example classical computer **1706.** Classical data processing system **1720** may include at least one processor **1722** coupled to memory elements **1724** through a system bus **1726.** As such, the data processing system may store program code within memory elements **1724.** Further, processor **1722** may execute the program code accessed from memory elements **1724** via system bus **1726.** In one aspect, data processing system may be implemented as a computer that is suitable for storing and/or executing program code. It should be appreciated, however, that data processing system **1720** may be implemented in the form of any system including a processor and memory that is capable of performing the functions described within this specification.

Memory elements **1724** may include one or more physical memory devices such as, for example, local memory **1728** and one or more bulk storage devices **1730.** Local memory may refer to random access memory or other non-persistent memory device(s) generally used during actual execution of the program code. A bulk storage device may be implemented as a hard drive or other persistent data storage device. The classical data processing system **1720** may also include one or more cache memories (not shown) that provide temporary storage of at least some program code in order to reduce the number of times program code must be retrieved from bulk storage device **1730** during execution.

Input/output (I/O) devices depicted as key device **1732** and output device **1734** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **1736** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with classical data processing system **1720.**

As pictured in **FIG. 17B,** memory elements **1724** may store an application **1738.** It should be appreciated that classical data processing system **1720** may further execute an operating system (not shown) that can facilitate execution of the application. Application, being implemented in the form of executable program code, can be executed by classical data processing system **1720,** e.g., by processor **1722.** Responsive to executing application, data processing system may be configured to perform one or more operations to be described herein in further detail.

In one aspect, for example, classical data processing system **1720** may represent a client data processing system. In that case, application **1738** may represent a client application that, when executed, configures classical data processing system **1720** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1738,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The corresponding structures, materials, acts, and equivalents of all means or step plus function elements in the claims below are intended to include any structure, material, or act for performing the function in combination with other claimed elements as specifically claimed.

The description of the present embodiments has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

**Claims**

1. A method for solving a differential problem using a hybrid computer system comprising a classical computer system and a quantum processor, the differential problem defining a differential equation, a target function defining an approximate solution of the differential equation, the target function being defined as a sum of basis functions with parameterized coefficients, the method comprising:

   receiving or determining information on one or more quantum circuits defining operations of a parameterized quantum model of the differential equation, the one or more quantum circuits defining operations for encoding primitive elements (e.g., terms such as f(x), f(x)/dx, g(x), etc.) of the differential equation in a plurality of quantum states of quantum elements of the quantum processor, each quantum state of the plurality of quantum states corresponding to a set of coefficients associated with the basis functions, at least one quantum state of the plurality of quantum states corresponding to a set of parametrized coefficients associated with the basis functions; and
   determining the solution to the differential problem based on the parameterized quantum model and a loss function associated with the differential problem, the determining including varying the variational parameters to determine a set of optimal parameters defining the solution of the differential equation; the varying of the variational parameters including:

   - translating the operations of the one or more quantum circuits into control signals for control and readout of the quantum elements of the quantum register;
   - applying the operations of one or more the quantum circuit to the quantum elements based on the control signals;
   - determining classical measurement data by measuring one or more comparisons, e.g. overlaps, between pairs of quantum states from the plurality of quantum states;
   - computing a loss value based on the loss function and the classical measurement data; and
   - adjusting the variational parameters based on the loss value.

2. The method as claimed in claim 1, wherein the one or more quantum circuits further define operations for:

   encoding a value of an independent variable of the differential equation in a first quantum state using a feature map associated with the basis functions;
   encoding at least one of the primitive elements in a second quantum state representing a set of coefficients associated with the basis function; and
   measuring an overlap between the first and second quantum states.

3. The method as claimed in claim 1 or 2, wherein the coefficients associated with a derivative of the parametrised target function are obtainable by multiplying the coefficients associated with the parametrised target function with a derivative generating matrix or Hermitian conjugate thereof, the derivative generating matrix being determined based on the basis functions.

4. The method as claimed in any one of the preceding claims, wherein encoding a primitive element corresponding to a known function of an independent variable of the differential problem comprises at least one of:

   - determining a parametrised representation of the known function based on a feature map associated with the basis functions and variationally optimising the parametrised representation, and using the optimised parameters to encode the primitive element;

- preparing a quantum state representing an amplitude encoding of the known function in the computational basis and applying a transform associated with the basis functions to the quantum state; or
- determining the coefficients and encoding the determined coefficients, wherein the coefficients are determined analytically or using the classical computer.

5. The method as claimed in any one of the preceding claims, wherein the one or more quantum circuits define operations for applying a transform associated with the basis functions, e.g. a Quantum Fourier Transform, a Quantum Chebyshev Transform, or a Quantum Hartley Transform, for transforming a state in the computational basis to a basis associated with the set of basis functions; or

wherein the one or more quantum circuits define operations for applying an inverse transform associated with the basis functions, e.g. an inverse Quantum Fourier Transform, an inverse Quantum Chebyshev Transform, or an inverse Quantum Hartley Transform, for transforming a state in the basis associated with the set of basis functions to the computational basis.

6. The method as claimed in any one of the preceding claims, wherein the differential problem comprises a boundary condition, and wherein the one or more quantum circuits define operations for encoding the target function and/or a derivative thereof at one or more input values associated with the boundary condition, the operations comprising a feature map associated with the basis functions for encoding the one or more input values, and wherein the loss value is based on measurement data obtained by measuring an overlap between the encoded one or more input values and a set of coefficients associated with the respective target function and/or derivative thereof.

7. The method as claimed in any one of the preceding claims, wherein determining the set of optimal parameters comprises:
determining a derivative of the target function and/or derivative thereof with respect to a parameter parametrizing the parametrised coefficients; and extremising a cost or loss function value based on a gradient-descent method or a gradient-ascent method.

8. The method as claimed in any one of the preceding claims, wherein the set of basis functions comprise functions based on Fourier functions, or wherein the set of basis functions define Chebyshev polynomials.

9. The method as claimed in any one of the preceding claims, wherein the differential problem comprises a product of at least a first and a second primitive element, optionally each of the first and second primitive elements represents the target function and/or a derivative of the target function, and wherein the one or more quantum circuits further comprise operations configured to:

encode the first primitive element in a first quantum state representing a set of first coefficients;
encode the second primitive element in a second quantum state representing a set of second coefficients; and
using adder and/or subtraction circuits to encode, based on the first quantum state and the second quantum state, the product in a third quantum state representing a set of third coefficients, wherein the third coefficients are obtained by addition and/or subtraction of the coefficients associated with the first primitive element and the coefficients associated with the second primitive element.

10. The method as claimed in any one of the preceding claims, wherein the differential problem comprises a plurality of independent variables, and wherein a first variable of the plurality of independent variables is encoded in a first quantum register and a second variable of the plurality of independent variables is encoded in a second quantum register.

11. The method as claimed in any one of the preceding claims,

wherein applying a quantum circuit to the quantum register comprises translating the quantum circuit into a sequence of signals and using the sequence of signals to operate the qubits in the quantum register of the quantum processor; and/or,
wherein receiving hardware measurement data comprises applying a read-out signal to qubits of the quantum processor and, in response to the read-out signal, measuring quantum hardware measurement data.

12. The method as claimed in any of the preceding claims, wherein the hybrid quantum computer includes a gate-based qubit device, a digital/analog quantum device, a neutral-atom-based quantum device, an optical qubit device and/or a gaussian boson sampling device.

13. A system for solving a differential problem, the differential problem defining a differential equation, a target function defining an approximate solution of the differential equation, the target function being defined as a sum of basis functions with parameterized coefficients, the system comprising a hybrid computer system, the hybrid computer system comprising a classical computer system and a quantum register, the hybrid quantum computer system being configured for:

receiving or determining, by the classical computer system, information on one or more quantum circuits defining operations of a parameterized quantum model of the differential equation, the one or more quantum circuits defining operations for encoding primitive elements (e.g., terms such as f(x), f(x)/dx, g(x), etc.) of the differential equation in a plurality of quantum states of quantum elements of the quantum processor, each quantum state of the plurality of quantum states corresponding to a set of coefficients associated with the basis functions, at least one quantum state of the plurality of quantum states corresponding to a set of parametrized coefficients associated with the basis functions; and

determining, by the classical computer system, the solution to the differential problem based on the parameterized quantum model and a loss function associated with the differential problem, the determining including varying the variational parameters to determine a set of optimal parameters defining the solution of the differential equation; the varying of the variational parameters including:

- translating the operations of the one or more quantum circuits into control signals for control and readout of the quantum elements of the quantum register;
- applying the operations of one or more the quantum circuit to the quantum elements based on the control signals;
- determining classical measurement data by measuring one or more comparisons, e.g. overlaps, between pairs of quantum states from the plurality of quantum states;
- computing a loss value based on the loss function and the classical measurement data; and
- adjusting the variational parameters based on the loss value.

14. A computer program product comprising software code portions configured for, when run in the memory of a computer, executing the method steps according to any one of claims 1-12.

15. A non-transitory computer-readable storage medium storing at least one software code portion, the software code portion, when executed or processed by a computer, is configured to perform the method as claimed in any one of claims 1-12.

Fig. 1A (prior art)

Fig. 1B

Fig. 1C

EP 4 495 844 A1

**Fig. 2A**

202 — Input: Differential Problem

204 — Select Parametric Quantum Model

206 — Write each term in Differential Problem as one or more terms in latent space

220 — Write unknown function as parametrized wavefunction

222 — Write derivative(s) as modified parametrized wavefunction

224 — Write known functions of x into latent space

208 — Solve system of equations in latent space

210 — Use a (non-)linear system solver

216 — Variational Solver Minimizing Loss

212 — QLSA, HHL etc

218 — Measure overlaps on Quantum Device

214 — Evaluate solution with the quantum model with solution parameters, at desired coordinates

**Fig. 2B**

$$dy/dx - 2x = 0$$
$$y(-1) = 1$$

$$y_\theta(x) = \langle x|y_\theta\rangle \begin{cases} |x\rangle = \frac{1}{2^{N/2}}T_0(x)|0\rangle + \frac{1}{2^{(N-1)/2}}\sum_{k=1}^{2^{N}-1} T_k(x)|k\rangle \\ |y_\theta\rangle = \mathcal{U}_\theta|0\rangle \end{cases}$$

$$|y_\theta\rangle = \mathcal{U}_\theta|0\rangle \qquad g(x) = 2x \text{ is } \alpha_g|g\rangle = -2^{3/2}|01\rangle$$

$$|dydx\rangle\rangle = G\mathcal{U}_\theta|0\rangle$$

Solve system of equations in latent space

Write as
$$A|y_\theta\rangle = |g\rangle \rightarrow -2^{3/2}G|f_\theta\rangle = |01\rangle$$

$$\mathcal{L}(\theta) = \text{abs2}(\langle 0|\mathcal{U}_\theta^\dagger G^\dagger G\mathcal{U}_\theta|0\rangle + \alpha_g\langle g|G\mathcal{U}_\theta|0\rangle + \alpha_g\langle 0|\mathcal{U}_\theta^\dagger G^\dagger|g\rangle + \alpha_g^2\langle g|g\rangle)$$
$$\mathcal{L}_{IV}(\theta) = (f_\theta(-1) - 1)^2$$

Evaluate solution at points $x_j$ using params $\tilde{\theta}$.
$$y_{\tilde{\theta}}(x_j) = \langle x_j|y_{\tilde{\theta}}\rangle$$

Fig. 3A

Fig. 3B

Fig. 4A

Fig. 4B

Fig. 5A

Fig. 5B

Fig. 5C

Fig. 5D

Fig. 6A

Fig. 6B

Fig. 7A

Fig. 7B

Fig. 8A

Fig. 8B

Fig. 8C

Fig. 8D

Fig. 8E

Fig. 8F

EP 4 495 844 A1

Fig. 8G

Fig. 8H

922   924

$|0\rangle$ — $H$ — $P_{2^1}(x)$ —

$|0\rangle$ — $H$ — $P_{2^2}(x)$ —

... ... ...

$|0\rangle$ — $H$ — $P_{2^n}(x)$ —

$$\frac{1}{\sqrt{N}}\begin{bmatrix} 1 \\ e^{i\,1x} \\ e^{i\,2x} \\ \ldots \\ e^{i\,(N-1)x} \end{bmatrix}$$

**Fig. 9B**

932   934

$|0\rangle$ — $H$ — $P_{2^1}(\arccos x)$ —

$|0\rangle$ — $H$ — $P_{2^2}(\arccos x)$ —

... ... ...

$|0\rangle$ — $H$ — $P_{2^n}(\arccos x)$ —

$$\frac{1}{\sqrt{N}}\begin{bmatrix} 1 \\ e^{i\,1\,\arccos x} \\ e^{i\,2\,\arccos x} \\ \ldots \\ e^{i\,(N-1)\,\arccos x} \end{bmatrix}$$

**Fig. 9C**

902   904   906   908   912

$|0\rangle_a$ — $H$ — $R_Z\left(-\dfrac{\pi}{2}\right)$ — $H$ — **0/1**

$|0\rangle$ — $H$ — $\tilde{P}^1_{2^1}(x)$ — $\tilde{P}^{-2}_{2^1}(x)$ — $X$ — $X$ —

$|0\rangle$ — $H$ — $\tilde{P}^1_{2^2}(x)$ — $\tilde{P}^{-2}_{2^2}(x)$ — $X$ — $X$ —

... ... ... ... ... ...

$|0\rangle$ — $H$ — $\tilde{P}^1_{2^n}(x)$ — $\tilde{P}^{-2}_{2^n}(x)$ — $X$ — $X$ —

910

$$\frac{1}{\sqrt{N}}\begin{bmatrix} \dfrac{1}{\sqrt{2}}T_0(x) \\ T_1(x) \\ T_2(x) \\ \ldots \\ T_{N-1}(x) \end{bmatrix}$$

**Fig. 9A**   $\tilde{P}^s_{2^j}(x) = P_{2^j}(s\arccos x) = \mathrm{diag}\left[1, \exp\left(i\,s\,\dfrac{N}{2^j}\arccos x\right)\right]$

Fig. 10A

Fig. 10B

**Fig. 11A**

$$f(x) = \mathrm{Re}(\langle\emptyset|\hat{U}_\theta\hat{U}_\tau(x)|\emptyset\rangle)$$

**Fig. 11B**

$$\mathrm{d}f(x)/\mathrm{d}x = \mathrm{Re}(\langle\emptyset|\hat{U}_\theta\,\hat{\mathcal{G}}_{\mathrm{eff}}\,\hat{U}_\tau(x)|\emptyset\rangle)$$

**Fig. 11C**

$$\sum_{l\,\in\,\mathrm{gates}}$$

$$\mathrm{d}f(x)/\mathrm{d}x = \Sigma_{l\in\mathrm{gates}}\,\mathrm{Re}\left(\langle\emptyset|\hat{U}_\theta\,\hat{U}_\tau^{(l)}(x)|\emptyset\rangle\right)$$

Parameter-Shift Rule (PSR):
Shift single-qubit gates, one gate per
circuit, and sum the results from all circuits

EP 4 495 844 A1

**Fig. 12A**

**Fig. 12B**

**Fig. 12E**

**Fig. 12C**

(a) Digital processing  12312

(b) Analog processing  1246

$$i\hbar\frac{d|\psi\rangle}{dt} = \mathcal{H}|\psi\rangle$$

1242

1240

$$\mathcal{H}(t) = \frac{\hbar}{2}\Omega(t)\sum_j \sigma_j^x - \hbar\,\delta(t)\sum_j n_j + \sum_{i\neq j}\frac{C_6}{r_{ij}^6}n_i n_j$$

1244

(c) Analog – digital processing

$1246_1$ digital   $1246_2$ digital   $1246_3$ digital

analog 12412 1

analog 12412 2

Fig. 12D

**Fig. 13A**

**Fig. 13B**

**Fig. 13C**

58

**Fig. 14A**

**Fig. 14B**

**Fig. 15A**

**Fig. 15B**

**Fig. 16**

$$e^{-i\,x\,\hat{G}/2}$$

$$f(x)$$

1712

1702

## quantum computer

### quantum processor

1708

### control and interface

1710

1704

## classical computer

### quantum circuit generator

1707

1706

**Fig. 17A**

1714

1706

| 1732 | 1734 |
|------|------|

1736

1726

1722

1728

1730

1738

1724

**Fig. 17B**

**Europäisches Patentamt**
**European Patent Office**
**Office européen des brevets**

# EUROPEAN SEARCH REPORT

Application Number

EP 23 18 6602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2022/101483 A1 (QU & CO R&D B V [NL]) 19 May 2022 (2022-05-19) * abstract; claims 1-19; figures 1-17 * * page 1, line 1 - page 18, last line * * page 20, line 9 - page 62, line 10 * ----- | 1-15 | INV. G06N10/60 G06N10/20 |
| A | OSCAR HIGGOTT ET AL: "Variational Quantum Computation of Excited States", ARXIV.ORG, CORNELL UNIVERSITY LIBRARY, 201 OLIN LIBRARY CORNELL UNIVERSITY ITHACA, NY 14853, 21 May 2018 (2018-05-21), XP080880612, * abstract * * page 1, left-hand column, line 1 - page 5, right-hand column, line 2 * * page 6, line 1 - page 7, last line * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 19 January 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 6602**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-01-2024**

| Patent document cited in search report | Publication date | Patent family member(s) | | Publication date |
|---|---|---|---|---|
| WO 2022101483 A1 | 19-05-2022 | AU | 2021379092 A1 | 29-06-2023 |
| | | CA | 3201802 A1 | 19-05-2022 |
| | | EP | 4244779 A1 | 20-09-2023 |
| | | JP | 2023550066 A | 30-11-2023 |
| | | KR | 20230113327 A | 28-07-2023 |
| | | US | 2023418896 A1 | 28-12-2023 |
| | | WO | 2022101483 A1 | 19-05-2022 |

EPO FORM P0459

For more details about this annex : see Official Journal of the European Patent Office, No. 12/82

**EP 4 495 844 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022101483 A1

- EP 23182499

### Non-patent literature cited in the description

- **H. BUHRMAN et al.** Quantum fingerprinting. *Physical Review Letters*, 2001, vol. 87 (16), 167902
- **CHILDS et al.** Quantum algorithm for systems of linear equations with exponentially improved dependence on precision. *SIAM Journal on Computing*, 2017, vol. 46, 1920-1950

- **KYRIIENKO et al.** Generalized quantum circuit differentiation rules. *Phys. Rev.*, vol. A 104, 052417